# EUROPEAN PATENT APPLICATION

(11) **EP 1 679 885 A1**
(43) Date of publication of application: **12.07.2006**
(21) Application number: 04735101.0
(22) Date of filing: 27.05.2004
(51) Int. Cl.: H04N 5/272

(54) **PHOTOGRAPHING SYSTEM AND PHOTOGRAPHING METHOD**

(30) Priority: 11.08.2003 JP 2003291100
(71) Applicant: MATSUSHITA ELECTRIC INDUSTRIAL CO., LTD., Kadoma-shi, Osaka 571-8501 (JP)
(72) Inventor: TSUKAMOTO, Yoshihiro, Kanagawa 223-0061 (JP); HATANO, Kouji, Tokyo 134-0088 (JP); KAWAMURA, Akira, Osaka 569-0081 (JP); SUGIURA, Masataka, Tokyo 158-0082 (JP)
(74) Representative: Grünecker, Kinkeldey, Stockmair & Schwanhäusser Anwaltssozietät
(86) International application number: PCT/JP2004/007675
(87) International publication number: WO 2005/015899

(57) **Abstract**

An image-taking apparatus 10 comprises: an image-taking section 18 for obtaining a taken image; a combination playback section 20 for reading stored data to compose a scenario image; a scenario storage section 12 for storing combination information for combining said scenario image and said taken image; a combination playback control section 22 for combining, according to combination information stored in said scenario storage section 12, said scenario image read by said combination playback section 20 and a taken image obtained by said image-taking section 18; and a display section 24 for displaying a combined image obtained by said combination playback control section 22.

## Description

### Technical Field

This invention relates to an apparatus and method for combining an image obtained by shooting and a scenario image.

### Background Art

In the past, several arts for combining two images have been suggested. Chroma Key is known as one of these arts. In Chroma Key, a subject is shot in front of a background of a certain color (commonly blue), which is made to be transparent so that an image of the subject is extracted. A combined image is then made by superimposing the extracted image on another image.

Japanese Patent Laid-Open Application No. 2001-346099 discloses an apparatus for accumulating images so that a Chroma-Key-based combined image can be easily made. The application says that, by storing an image of a subject taken by a camera on the spot and shooting conditions of the camera at the time of shooting in association with each other, they can be used for creation of a combined image as needed in the future.

Japanese Patent Laid-Open Application No. Heisei 4-183183 discloses an image signal processing apparatus for combining a playback image of a Karaoke software and a face or figure of a singer.

### Disclosure of Invention

The apparatus disclosed in Japanese Patent Laid-Open Application No. 2001-346099 is an apparatus for storing taken images and combining images afterward. For images for television broadcast use, for example, high precision image combination is required and it is desirable that an apparatus like the above be used to edit images. However, there are times when easy operation at the time of image combination or speedy image combination is required depending on usage.

An example where easy operation at the time of image combination is regarded as important is a case of combining an image taken by a camera-equipped mobile phone with another image. Since screen size and key types of mobile phones have their limits, it is troublesome to read a once-taken image, clip a desired part from the read image, and edit.

Though it is possible to move an image taken by a mobile phone to a terminal for image combination use to process, the edited combined image cannot be seen immediately.

The apparatus disclosed in Japanese Patent Laid-Open Application No. Heisei 4-183183 assumes that a taken image to be combined would be a face or figure of a Karaoke singer. Under this assumption, a singer's standing position is almost fixed in front of a screen displaying lyrics, and a taken image can be obtained appropriately even if a position or orientation of a video camera for shooting is not adjusted. In addition, a taken image only has to be combined when the video starts, and combination timing need not be controlled.

As above, in the image signal processing apparatus according to Japanese Patent Laid-Open Application No. Heisei 4-183183, a taken image to be combined is a predetermined object (a face or figure of a Karaoke singer), and combination timing is always during playback of a Karaoke software. An object of a taken image to be combined and its combination timing cannot be controlled in accordance with a scenario image being played back.

A purpose of the present invention considering the above-mentioned background is to provide an image-taking apparatus and image-taking method which can combine images while shooting. Another purpose of the invention is to provide an image-taking apparatus which can combine a taken image appropriately at desired timing.

An image-taking apparatus of the invention comprises: an image-taking means for obtaining a taken image; a reading means for reading stored data to compose a scenario image; a storage means for storing combination information for combining the scenario image and the taken image; a combination means for combining, according to combination information stored in the storage means, the scenario image read by the reading means and a taken image obtained by the image-taking means; and a display means for displaying a combined image obtained by the combination means.

In this configuration in which a taken image and a scenario image are combined according to combination information stored in a storage means and a combined image obtained by combination is displayed by a display means, a user can shoot while viewing a combined image displayed by the display means. For example, a user can adjust a position or orientation of the image-taking apparatus so that a taken image can be obtained appropriately, and can choose a subject suitable for a scenario image. That is, a user can move the image-taking apparatus to catch sight of a desired subject while viewing a combined image displayed by the display means. In addition, combining while shooting can realize speedy image combination in which image combination is completed when shooting is finished. By the way, a "scenario image" is an image which is to be combined with a taken image and has a concept of time, and its examples are a moving image, an animation, a slideshow, etc. A scenario image is displayed etc. generally according to scenario information. Scenario information is information describing which one of multimedia data, such as a moving image, still image, text, and sound, is to be outputted when, where, and how. A "taken image" is an image obtained by the image-taking means while a scenario image is played back, and is not composed of data previously stored in the storage means such as a file. A taken image may be a moving image or a still image.

The combination information includes information about time to combine the taken image and the scenario image.

In this configuration, time to combine a taken image and a scenario image can be defined based on combination information. Information about time is defined by, for example, a scenario image time to start combining or a scenario image time to end combining.

The combination information includes at least one of information about an outer shape of a combination area with which the taken image is to be combined and information about a position of the combination area in an image composing the scenario image.

In this configuration, a combination area with which a taken image is to be combined can be defined. A taken image and a scenario image can be combined by inserting the taken image into the combination area. Incidentally, the whole of an image taken by the image-taking means may be combined with the combination area, or part of a taken image may be combined with the combination area.

The above image-taking apparatus may further comprise a means for showing, based on the combination information and at or before time to combine the taken image and the scenario image, information about the combination area to a user who is to control the image-taking means.

This configuration allows a user to obtain information about a combination area at or before time to combine a taken image and a scenario image. The user can therefore change etc. a position or orientation of an image-taking means, i.e. a camera, or shooting conditions in order to take an image to be combined with a scenario image. Incidentally, "at or before time to combine a taken image and a scenario image" may mean "prior to time to start combining" or may mean "at time to start combining." In a case where information about a combination area is shown at time to start combining, a playback of a scenario image is desirably caused to pause in order to secure time for a user to control a camera.

Information about a combination area to be shown to the user may be based on at least one of information about an outer shape and information about a position of the combination information.

In this configuration, a user can predict an image to be combined with a combination area and can prepare for shooting. An example of showing information based on information about an outer shape is to display an outline of a combination area. A shape and size of the combination area can thus be shown. Showing information about a position is effective when part of a taken image is to be combined with a combination area and when the whole taken image is superimposed on the whole image composing a scenario image. That is, a position or orientation of a camera just has to be adjusted so that a position of an object, in a taken image, to be combined corresponds to a position of a combination area in an image composing a scenario image.

Information about a combination area to be shown to the user may include an image obtained by processing, according to at least one of information about an outer shape and information about a position of the combination information, a taken image obtained by the image-taking means.

Showing a taken image as above allows a user to know what taken image is being obtained by the image-taking means.

This allows a user, for example, to keep a subject to be combined in focus before time to start combining.

Incidentally, processing according to combination information means, for example, processing such as clipping and scaling of a taken image, and this allows a user to know what image will be displayed when a taken image is inserted into a combination area. A taken image may be displayed, for example, with an image which composes a scenario image at time to start combining, or may also be displayed with a scenario image currently displayed by the display means, that is, a scenario image before time to start combining. In the latter case, a taken image and an image composing a scenario image currently displayed may be displayed one on another or side by side.

Information about a combination area to be shown to the user may include an image obtained by combining, according to the combination information, a taken image obtained by the image-taking means and an image composing the scenario image in which the combination area is to appear.

Showing a user as above a combined image preview, which is a combination of a taken image obtained by the image-taking means and an image composing a scenario image in which a combination area is to appear, allows the user to make a taken image to be combined with the combination area be a desired image. That is, a user can choose and shoot an image suitable for a combination area by viewing a combined image preview. A user can adjust the image-taking means' zoom ratio in accordance with a shape and size of a combination area, or can also adjust brightness of a taken image so as to match a scenario image which is going to be a background. A combined image preview may be displayed after a playback of a scenario image is caused to pause, or may be displayed on a different screen from a screen in which a scenario image is being played back.

The above image-taking apparatus comprises a means for causing a playback of the scenario image to pause at time to start combining the scenario image and the taken image.

Causing a playback of a scenario image to pause as above allows a user to secure time to control the image-taking means, i.e. a camera.

In the above image-taking apparatus, a position of the combination area in an image composing the scenario image may be set to move with time.

In this configuration, a position of a combination area in an image composing a scenario image can be moved with time even if a position or orientation of a camera is not changed. For example, if information about a position of a combination area included in combination information is represented as a function of time, the combination area can be set to be movable.

In the above image-taking apparatus, an outer shape of the combination area may be set to change with time.

In this configuration, an outer shape of a combination area can be changed with time. For example, if a plurality of shape information are included, as information on an outer shape of a combination area, in combination information, and if each piece of the shape information is related to time, the shape of the combination area can be set to change.

The above image-taking apparatus may further comprise a means for informing a user that time to start combining the scenario image and the taken image has approached.

In this configuration, a user can prepare for taking an image to be combined. Examples of the means for informing a user are a configuration which counts down using characters, a configuration which informs by sound or light, a configuration which informs by slowing down a playback speed of a scenario image, or the like. A "user" here includes a person to be a subject as well as a person who shoots.

The above image-taking apparatus may further comprise a means for, in a certain time period including time to start combining the scenario image and the taken image, informing a user of information about a start of combination.

This configuration allows a user to know that a combination is to be started soon or that a combination has been started, so that the user can obtain a taken image to be combined. The means for informing a user of information about a start of combination can be realized, for example, by a configuration which outputs sound or by a configuration which blinks light in a certain time period including a combination start time. Outputting sound or light before or after a combination start time can push a user to obtain a taken image. Even when a user starts shooting a taken image after a combination start time, a combined image can be obtained appropriately for time from the combination start time to the time at which the user starts shooting. It can be done, for example, by complementing the image to be combined with the taken image after the start of shooting. A "user" here includes a person to be a subject as well as a person who shoots.

The above image-taking apparatus may further comprise a means for recording the combined image.

In this configuration, a combined image which is combined while being taken can be played back later as it is.

The above image-taking apparatus may further comprise a means for recording a taken image obtained by the image-taking means in association with identification information of the scenario image.

In this configuration, playing back an associated scenario image and a taken image while combining them allows a combined image to be played back. If a plurality of taken images are recorded for one scenario image, a plurality of differently combined images can be played back from the one scenario image.

The image-taking means may take an image based on information about an image-taking condition included in the combination information.

In this configuration, an image suitable for the content of an image to be combined with a combination area can be taken. Examples of image-taking conditions are brightness, whether there is a photo light or not, a zoom ratio, a color tone (sepia, black and white, color), etc.

The above image-taking apparatus may comprise an input means for having a user input at least one of a start instruction and an end instruction of combination of the taken image and the scenario image.

This configuration allows a user to choose timing of a start or end of combination of a taken image and a scenario image. If a configuration which has a user input a combination start instruction is adopted, a user can start combining, for example, at a step when the user is ready to take an image to be combined. If a configuration which has a user input a combination end instruction is adopted, a user can end combining, for example, when the user becomes unable to continue taking an image to be combined. A "user" here is a person who shoots.

In the above image-taking apparatus, when the combination start instruction is inputted after time, defined by the combination information, to start combining the taken image and the scenario image, an image to be combined with the combination area, between the defined combination start time and input of the combination start instruction, may be complemented with the taken image or the scenario image.

In this configuration, a combined image can be created appropriately even if a combination start instruction is inputted by a user after a combination start time defined by combination information. Examples of a method of complementing with a taken image are: a method in which a taken image at a time when a combination start instruction is inputted is applied to a combination area for a time period from a combination start time defined by combination information to time when the combination start instruction is inputted; or a method in which a playback speed of a taken image is slowed down so that the taken image is extended over the length of a combination time defined by combination information. An example of a method of complementing with a scenario image is a method in which a default scenario image is displayed in a combination area from a combination start time defined by combination information to time when a combination start instruction is inputted.

In the above image-taking apparatus, when the combination end instruction is inputted before time, defined by the combination information, to end combining the taken image and the scenario image, an image to be combined with the combination area, between input of the combination end instruction and the defined combination end time, may be complemented with the taken image or the scenario image.

In this configuration, a combined image can be created appropriately even if a combination end instruction is inputted before a combination end time defined by combination information. Examples of a method of complementing with a taken image are: a method in which a taken image at a time when a combination end instruction is inputted is applied to a combination area from time when the combination end instruction is inputted to a combination end time defined by combination information; or a method in which a playback speed of a taken image is slowed down so that the taken image is extended over the length of a combination time defined by combination information. An example of a method of complementing with a scenario image is a method in which a default scenario image is displayed in a combination area from time when a combination end instruction is inputted to a combination end time defined by combination information.

The display means may be composed of a plurality of screens, at least one of which displays the scenario image or the combined image.

In this configuration, while a scenario image or a combined image is displayed on one screen, other information can be checked on another screen. For example, an image being taken by the image-taking means can be displayed on another screen. This allows focusing in advance on a subject to be combined and to obtain a taken image appropriately. An image which the image-taking means is catching can also be displayed on another screen as a preview image. If one screen is provided on a subject side so that the subject can view a combined image, the subject can check the combined image.

The above image-taking apparatus may comprise a light means for shining light to indicate a spot or area to be taken by the image-taking means.

In this configuration, light shone to a subject allows a user to predict a taken image to be obtained by the image-taking means and to control a position or orientation of a camera based on the prediction.

In the above image-taking apparatus, a taken image obtained by the image-taking means may be a continuously-taken moving image and the combination means may combine the scenario image and the moving image.

As above, a moving image obtained by the image-taking means can be combined with a scenario image based on combination information.

In the above image-taking apparatus, a taken image obtained by the image-taking means is one or more still images and the combination means uses one of the still images for a certain time period as an image to be combined with a scenario image.

As above, a sill image obtained by the image-taking means can be combined with a scenario image based on combination information. Incidentally, a "certain time period" may mean a combination time defined by combination information or may mean part of a combination time. When one of still images is combined in part of a combination time, another or others of the still images can be combined in the rest of the combination time.

The above image-taking apparatus may comprise a partial image clipping means for clipping, as a partial image, part of a taken image taken by the image-taking means, wherein the combination means combines a partial image clipped by the partial image clipping means and the scenario image.

In this configuration, a partial image clipped from a taken image can be combined with a scenario image.

In the above image-taking apparatus, combination information stored in the storage means may include partial image specification information to specify an area from which and time period for which the partial image clipping means clips a partial image, and the partial image clipping means may clip a partial image from the taken image based on the partial image specification information.

In this configuration, a partial image to be clipped from a taken image can be defined in combination information. For example, a partial image which matches a scenario image can be defined.

In the above image-taking apparatus, a position of the partial image to be clipped specified in the partial image specification information may move with time.

In this configuration, a position of a partial image to be combined with a scenario image can be moved with time even if a position or orientation of a camera is not changed.

In the above image-taking apparatus, a shape of the partial image to be clipped specified in the partial image specification information may change with time.

In this configuration, a shape of a partial image can be changed with time.

In the above image-taking apparatus, the partial image specification information, by an object to be included in the partial image, may specify a partial image, and the partial image clipping means may clip from the taken image, as the partial image, a part which contains an object specified in the partial image specification information.

In this configuration, a partial image which matches a scenario image can be specified easily since a partial image is specified by an object.

In the above image-taking apparatus, the combination information, by an object to be include in the combination area, may specify the combination area, and the combination means may regard as the combination area a part, of the scenario image, which displays an object specified in the combination information, and may combine the taken image with the combination area.

In this configuration, a combination area can be specified easily since a combination area is specified by an object.

The above image-taking apparatus may comprise a control means for controlling to cause the scenario image to pause when there is data whose playback is to be started at time to start combining the taken image and after a playback of that data is started.

In this configuration, before a playback of a scenario image is caused to pause at time to start combining, a playback of data to be started at the same time is started, so that a scenario image at the combination start time can be displayed with the image pausing.

The above image-taking apparatus may comprise: a preview image storage means for storing as a preview image a scenario image which is to be displayed at time to start combining the taken image; and a control means for controlling, at time to start combining the taken image, to display the preview image and cause the scenario image to pause.

In this configuration, since a scenario image to be displayed at time to start combining is stored as a preview image and the stored preview image is displayed at the combination start time, the preview of the scenario image at the combination start time can be displayed easily with the image pausing.

In the above image-taking apparatus, the control means may shift a point to resume a playback of the scenario image to time to start the combination.

In this configuration, regardless of a processing time that took to cause a playback of a scenario image to pause, the playback of the scenario image can be resumed from a combination start time.

Scenario data of the invention has: scenario information which describes a method of outputting stored data; and combination information for combining a taken image to be obtained by shooting and a scenario image to be outputted according to a description of the scenario information.

In this configuration, a scenario image to be outputted based on stored data and a taken image can be combined easily. Combination information is information for combining a taken image and a scenario image, and its example is information which describes at what timing and with what position a taken image is to be combined.

Scenario information is information which describes a method of outputting stored data. While scenario information describes in advance what data is to be outputted, combination information does not fix in advance data to be outputted but describes that data of each different taken image is to be outputted for every shooting. Since a taken image obtained by shooting is outputted based on combination information and stored data is outputted based on scenario information, the scenario image and the taken image can be combined easily.

The combination information may include information about time to combine the taken image and the scenario image.

In this configuration, time to combine a taken image and a scenario image can be defined based on combination information. Information about time is defined by, for example, a scenario image time to start combining or a scenario image time to end combining.

The combination information may include at least one of information about an outer shape of a combination area with which a taken image is to be combined and information about a position of the combination area in an image composing the scenario image.

In this configuration, a combination area with which a taken image is to be combined can be defined. A taken image and a scenario image can be combined by inserting the taken image into the combination area. Incidentally, the whole of an image taken by the image-taking means may be combined with the combination area, or part of a taken image may be combined with the combination area.

In the above scenario data, the combination information may include partial image specification information to specify an area from which and time period for which part of the taken image is clipped as a partial image.

In this configuration, a partial image to be clipped from a taken image to be combined with a scenario image can be defined.

A position of the partial image to be clipped specified in the partial image specification information may move with time.

In this configuration, a position of a partial image to be combined with a scenario image can be moved with time even if a position or orientation of a camera is not changed.

A shape of the partial image to be clipped specified in the partial image specification information may change with time.

In this configuration, a shape of a partial image can be changed with time.

The partial image specification information, by an object to be included in a partial image, may specify an area and time period of the partial image.

In this configuration, a partial image which matches a scenario image can be specified easily since a partial image is specified by an object.

In the above scenario data, the combination information, by an object to be included in a combination area with which a taken image is to be combined, may specify the combination area and a time period for which the scenario image includes the combination area.

In this configuration, a combination area can be specified easily since a combination area and a time period for which a scenario image includes a combination area is specified by an object.

An image-taking method of the Invention comprises steps of: reading stored data so as to compose a scenario image; obtaining a taken image; reading combination information for combining the scenario image and the taken image; combining the scenario image and the taken image according to the combination information; and displaying a combined image obtained in the combination step.

As above, a taken image and a scenario image are combined according to combination information and a combined image obtained by combination is displayed, so that a user can shoot while viewing a displayed combined image. For example, a user can adjust a position or orientation of the image-taking apparatus so that a taken image can be obtained appropriately, and can choose a subject suitable for a scenario image. That is, a user can move a camera for obtaining a taken image to catch sight of a desired subject while viewing a displayed combined image. In addition, combining while shooting can realize speedy image combination in which image combination is completed when shooting is finished.

A program of the invention, in order to combine a taken image and a scenario image, makes a computer execute steps of: reading stored data so as to compose a scenario image; obtaining a taken image; reading combination information for combining the scenario image and the taken image; combining the scenario image and the taken image according to the combination information; and displaying a combined image obtained in the combination step.

A computer made to execute this program combines a taken image and a scenario image according to combination information and displays a combined image obtained by the combination. This allows a user to shoot while viewing a displayed combined image. For example, a user can adjust a position or orientation of the image-taking apparatus so that a taken image can be obtained appropriately, and can choose a subject suitable for a scenario image. That is, a user can move a camera for obtaining a taken image to catch sight of a desired subject while viewing a displayed combined image. In addition, combining while shooting can realize speedy image combination in which image combination is completed when shooting is finished.

The image-taking apparatus of the invention combines a taken image and a scenario image based on combination information for combining a scenario image and a taken image and displays a combined image by the display means. As a result, the invention can provide great advantages in that a user can shoot while viewing a combined image displayed by the display means and can adjust a position or orientation of the image-taking apparatus so that an image to be combined is taken appropriately.

### Brief Description of Drawings

Figure 1 shows a configuration of an image-taking apparatus of a first embodiment.
Figure 2 shows an example of scenario data.
Figure 3 shows an example of a display of a scenario image.
Figure 4A illustrates a method of recording a scenario image.
Figure 4B illustrates a method of recording a scenario image. '
Figure 5A illustrates a method of recording a scenario image.
Figure 5B illustrates a method of recording a scenario image.
Figure 6 shows an operation flow of image combination by the image-taking apparatus.
Figure 7 shows a relation between an operation of an image-taking means, a display of a display means, and scenario data.
Figure 8A shows an example of a combined image preview.
Figure 8B shows an example of a combined image.
Figure 9 shows a configuration of an image-taking apparatus of a second embodiment.
Figure 10 shows a relation between an operation of an image-taking means, a display of a display means, and scenario data.
Figure 11A shows an example of a combined image.
Figure 11B shows a presentation example of a combination area.
Figure 12 shows a configuration of an image-taking apparatus of a third embodiment.
Figure 13 shows a configuration of an image-taking apparatus of a fourth embodiment.
Figure 14 shows a relation between an operation of an image-taking means, a display of a display means, and scenario data.
Figure 15 shows a relation between an operation of an image-taking means, a display of a display means, and scenario data.
Figure 16 shows a configuration of an image-taking apparatus of a fifth embodiment.
Figure 17 shows a relation between an operation of an image-taking means, a display of a display means, and scenario data.
Figure 18 shows a relation between an operation of an image-taking means, a display of a display means, and scenario data.
Figure 19 shows a configuration of an image-taking apparatus of a sixth embodiment.
Figure 20 shows an example of scenario data.
Figure 21A shows an example of a taken image.
Figure 21B shows an example of a partial image.
Figure 22 shows an example of combination information.
Figure 23A shows an example of a change of a combination area.
Figure 23B shows an example of a partial image.
Figure 24 shows an example of combination information.
Figure 25 shows a configuration of an image-taking apparatus of a seventh embodiment.
Figure 26 shows an example of scenario data.
Figure 27A shows an example of a taken image.
Figure 27B shows an example of a partial image.
Figure 28 shows an example of scenario data.
Figure 29A shows an example of a scenario image.
Figure 29B shows a combination area in a scenario image.
Figure 30 shows a configuration of a combination playback control section of a ninth embodiment.
Figure 31A shows an example of scenario data.
Figure 31B shows an example of a schedule list.
Figure 32 shows a configuration of a combination playback control section of a tenth embodiment.
Figure 33A shows an example of scenario data.
Figure 33B shows an example of a schedule list.
Figure 34 shows a configuration of a combination playback control section of an eleventh embodiment.
Figure 35A shows an example of scenario data.
Figure 35B shows an example of a schedule list.
Figure 36 shows a display example of each screen in a case where an image-taking apparatus has two screens.
Figure 37 shows a display example of each screen in a case where an image-taking apparatus has two screens.
Figure 38 shows a display example of each screen in a case where an image-taking apparatus has two screens.
Figure 39 shows an example of a program of the invention.

Best Mode of Embodying the Invention

Embodiments of the invention will be described with reference to the drawings.

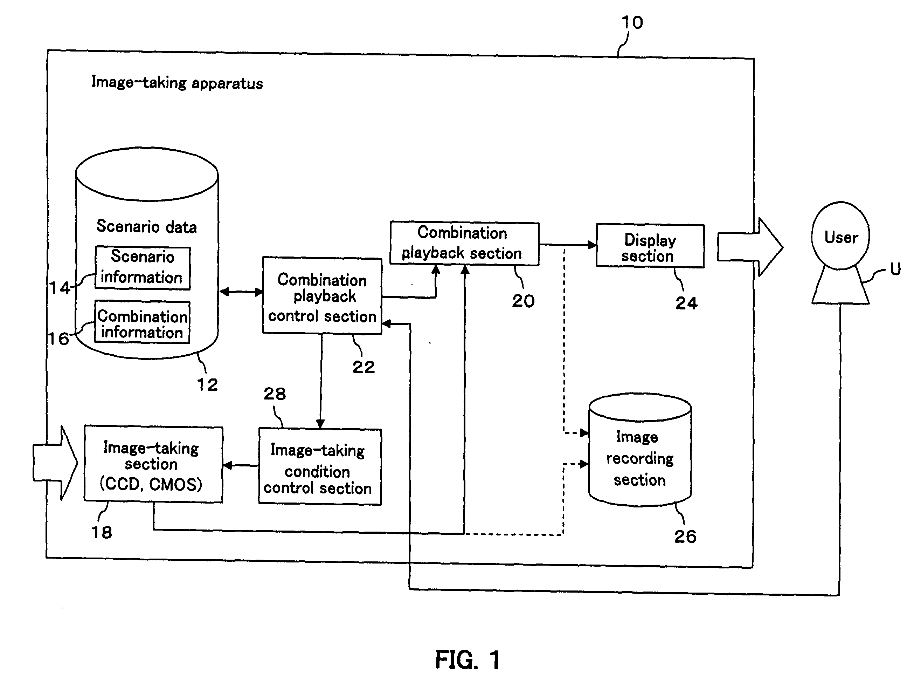

Figure 1 shows a configuration of an image-taking apparatus 10 of a first embodiment of the invention. The image-taking apparatus 10 of the first embodiment is a portable image-taking apparatus which allows a user to change a subject of shooting by changing a position or orientation of the apparatus. A portable video camera and a camera-equipped mobile phone are examples of the apparatus. The image-taking apparatus 10 comprises a scenario storage section 12 for storing scenario data, an image-taking section 18 for obtaining a taken image, a combination playback section 20 for playing back a scenario image and combining a scenario image and a taken image, a combination playback control section 22 for controlling the combination playback section 20, and a display section 24 for displaying a combined scenario image. The image-taking section 18 is composed of, for example, a CCD, a CMOS, or other semiconductor devices, and has a function to obtain a digital image. The image-taking section 18 can take at least one of a moving image and a still image.

Before a detailed description of the image-taking apparatus 10, scenario data to be combined in the image-taking apparatus 10 will be described. Scenario data includes scenario information 14 and combination information 16. The scenario information 14 is information which describes a method of outputting entity data to be outputted. A scenario image to be played back based on the scenario information 14 is an image which changes with time, and its examples are a moving image, an animation, a slideshow, etc. The combination information 16 is information about: an outer shape of a combination area for combining a taken image and a scenario image; a position of a combination area in an image composing a scenario image; and time when a combination area appears. Time when a combination area appears is time when a scenario image and a taken image are to be combined.

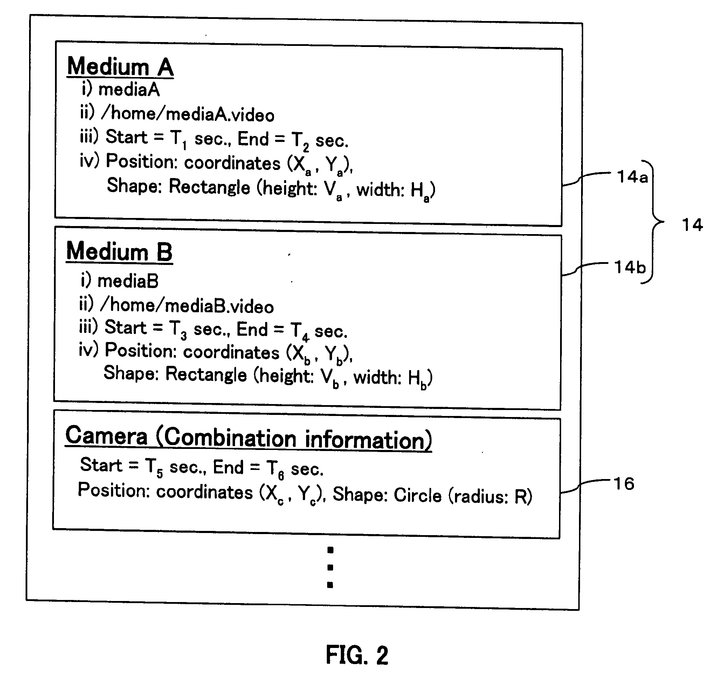

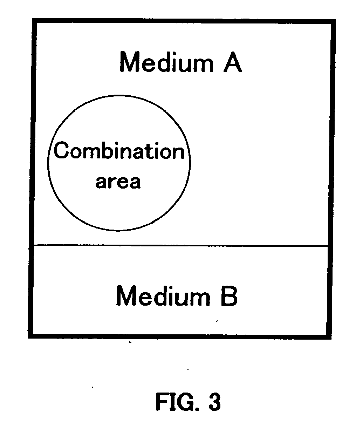

Figure 2 shows an example of scenario data, and Figure 3 shows an example of a scenario image and combination area which are displayed on a screen according to the data shown in Figure 2. A scenario image may be composed of one medium or of a plurality of media. In Figure 3, a scenario image is composed of a medium A and a medium B, and a combination area is located on an image in the medium A. A combination area is an area with which a taken image to be obtained by the image-taking section 18 is combined. Incidentally, a scenario image may include a time period in playback time for which a medium is not played back. For example, when T2 < T3 in the example shown in Figure 2, a time period for which the medium A is played back does not overlap with a time period for which the medium B is played back, and no medium is played back between time T2 and T3. Such a scenario image is included within the scope of the invention.

In the example shown in Figure 2, the scenario data has the scenario information 14 and the combination information 16.

The scenario information 14 has scenario information 14a which describes an output method for the medium A and has scenario information 14b which describes an output method for the medium B. Each scenario information 14a and 14B includes: i) a medium identifier; ii) a storage location of entity data; iii) information about time to play back and display a medium; and iv) information about an area to display an image. Each of the scenario information 14a and 14b here includes four pieces of information in this example, but may include another piece of information as required.

A medium identifier is information for identifying a medium. A storage location of entity data is information which indicates a directory and name of a file in which entity data of a medium is stored. The scenario information 14 here has information about a storage location of entity data, and the entity data is stored separately from the scenario data. Though both of the entity data of the medium A and medium B are stored in a "home" directory in Figure 2, entity data of each medium may be stored in different places. In this configuration in which storage locations of entity data can be specified, various existing data, for example, can be used easily as scenario images. Information about time to play back and display a medium is information for specifying time for which an image is to be played back based on the medium. In this example, playback start timing and playback end timing are defined by the elapsed time from an instruction to start playing back a scenario image, so that the playback display time is specified. As can be seen, for example, a playback of the medium A is started at a time when T1 seconds have passed after an instruction to start playing back a scenario image, and is ended at a time when T2 seconds have passed. Information about an area to display an image is information about a position at which and shape in which an image based on the medium is displayed. As can be seen, for example, the medium A is displayed at a position with coordinates (Xa, Ya) and the shape is rectangular.

As above, the scenario information 14 can have information about time and area to display the medium. An image in the medium is displayed at a specified time and in a specified area based on the information. Though scenario data is described for every medium here, another description method can be adopted. For example, an output method may be described for every playback time of a scenario image.

The combination information 16 will be described next. The combination information 16 is information for combining a scenario image and a taken image. The combination information 16 includes time information about time when a combination area appears, and includes area information about a position and outer shape of a combination area. The time information is information which defines time when a combination area appears in a scenario image by the elapsed time from a start of a playback of a scenario image. In the example shown in Figure 2, a combination area appears for a time period from T5 seconds to T6 seconds after a start of a playback of a scenario image. That is, a scenario image and a taken image are to be combined over this time period. Area information is information which defines a position and outer shape of a combination area that appears for a time period defined by time information. In the example shown in Figure 2, coordinates of a position where a combination area appears are (Xc, Yc), and the shape of the combination area is a circle of radius R. Incidentally, a position where a combination area appears can be set so that the position of the combination area moves, by making coordinates defining the appearance position be a function of time. An outer shape of a combination area can also be changed with time of a playback of a scenario image by setting a time parameter.

An image to be combined with a combination area is displayed so that it overwrites another image. When a combination area overlaps with an image in a medium, an image in the combination area is displayed with priority. For example, as shown in Figure 3, when a combination area and a display area of an image in the medium A overlap with each other, the combination area is placed in front of the image in the medium A, and the image in the medium A is overwritten by an image taken by the image-taking section 18.

Returning to Figure 1, the configuration of the image-taking apparatus 10 will now be described.

The scenario storage section 12 stores scenario data like the one being described in Figure 2. The image-taking apparatus 10 has: the combination playback section 20 for reading scenario data stored in the scenario storage section 12 to play back a scenario image on the display section 24 and for combining an image taken by the image-taking section 18 and the scenario image; and the combination playback control section 22 for controlling the combination playback section 20.

The combination playback control section 22 reads the scenario information 14 and the combination information 16 from the scenario storage section 12, and controls the combination playback section 20 based on these pieces of information. By inserting an image taken by the image-taking section 18 into a combination area in a scenario image based on the combination information 16, the combination playback control section 22 combines the taken image and the scenario image. The image to be combined at this time may be the whole of an image obtained by the image-taking section 18, or may be part of the obtained image. When an image obtained by the image-taking section 18 is combined, the image is processed so that it matches the size of a combination area. For example, an image to be combined is clipped and/or a taken image is scaled in order for them to match a combination area. In a case where part of an image obtained by the image-taking section 18 is used for combining, the process is easy if a part where a combination area in a scenario image is located at a start time of an appearance of the combination area is clipped from the taken image for combining. That is, when a scenario image to be displayed and an image obtained by the image-taking section 18 are overlaid with each other to be displayed on the display section 24, a part which overlaps with a combination area is clipped from the taken image for combining. It is therefore easy to adjust the orientation of the image-taking apparatus 10 so that an object to be placed in a combination area is shot by the image-taking section 18. Part of a taken image in a fixed position (e.g. the center) may be clipped so that it matches an outer shape of a combination area and be used for combining, regardless of a position where the combination area appears. Combination information may include information about a position in a taken image from which an image is clipped, and the image to be combined with a combination area may be clipped from a taken image based on the information.

The combination playback section 20 plays back a scenario image and a combined' image based on control by the combination playback control section 22. When a scenario image is played back, based on scenario information stored in the scenario storage section 12, entity data stored in a storage section not shown in Figure 1 is read according to the scenario information, and the read entity data is played back. Entity data, which is not shown in Figure 1, may be stored in any place. It can be stored in the scenario data storage section 12 with scenario data. The combination playback section 20 reads entity data from a storage place specified in scenario information and plays it back. Entity data can also be read by the combination playback control section 22 to be sent to the combination playback section 20.

An image combined by the combination playback control section 22 is recorded in an image recording section 26. As a method of recording in the image recording section 26, a method in which a combined image played back on a screen is recorded as it is may be adopted, or a method in which a taken image to be combined and a scenario image are recorded separately may be adopted. In a case where the former method is adopted, just reading a recorded combined image allows a combined image to be played back as it is.

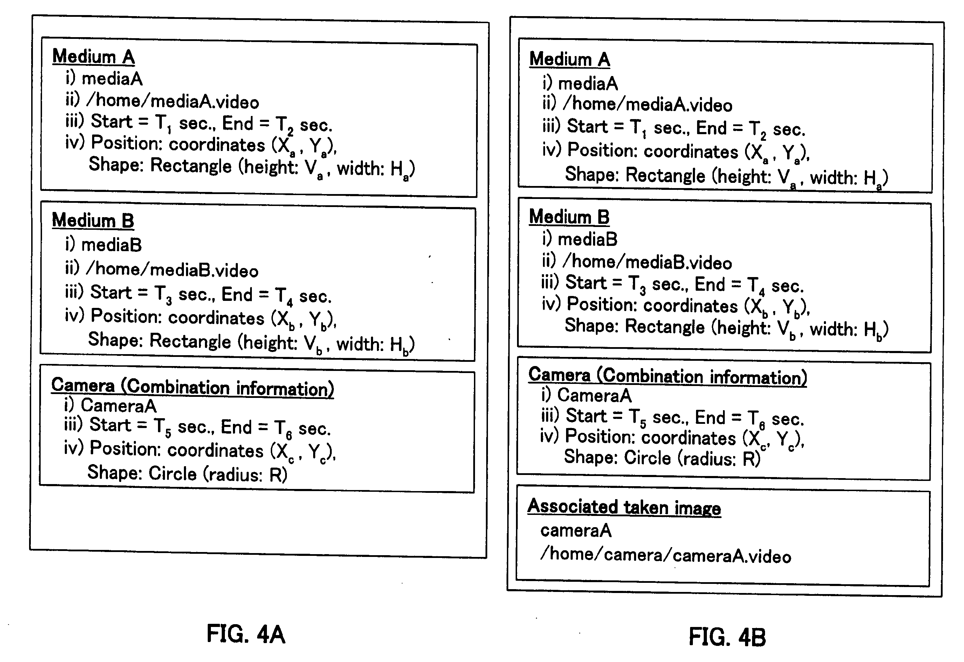

In a case where the latter method is adopted, identifier information on a scenario image with which a taken image is combined is associated. For example, as shown in Figure 4A, i) a combination information identifier is included in combination information in advance. An identifier "CameraA" is given here, which indicates that a taken image taken by the CameraA is to be combined. When a taken image is recorded, information about a place (a directory and filename) in which data of a taken image taken by the image-taking section 18 is stored is associated with scenario data as shown in Figure 4B. At the time of playback, a recorded taken image is read while a scenario image is read. Then, based on the combination information of the scenario image, the read taken image is combined and the combined image is displayed, so that the combined image can be played back.

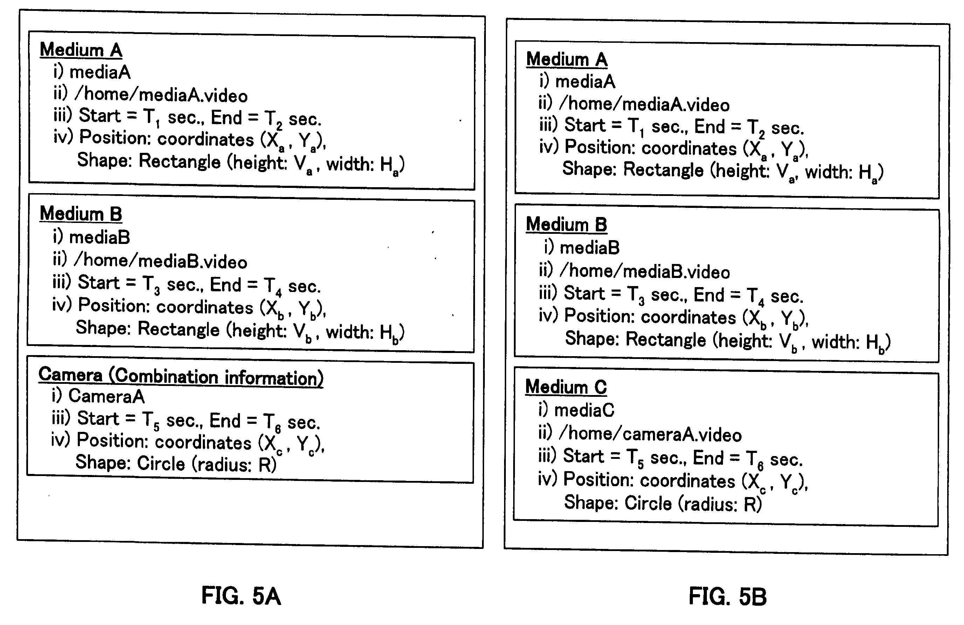

Scenario data whose combination information includes information on a taken image may be created. That is, as shown in Figure 5A, i) a combination information identifier is included in combination information in advance. When a taken image is recorded, as shown in Figure 5B, a taken image taken by the image-taking section 18 is treated as one of media (medium C) composing scenario data to create new scenario data. The medium C, in common with the medium A or medium B, includes: i) a medium identifier; ii) a storage location of entity data; iii) information about time to play back and display a medium; and iv) information about an area to display an image.

As for a time period for recording, a method of recording from start to end of a playback of a scenario image may be adopted, or a method of recording a part of a scenario image in which a combination area appears may be adopted.

An image-taking condition control section 28 has a function to control image-taking conditions etc. of the image-taking section 18. Examples of image-taking conditions are brightness, whether there is a photo light or not, a zoom ratio, a color tone (sepia, black and white, color), etc. In a case where the combination information 16 includes information on an image-taking condition of an image to be combined, the image-taking condition control section 28 sets an image-taking condition based on the information. The image-taking condition control section 28 can also accept a setting of an image-taking condition by a user.

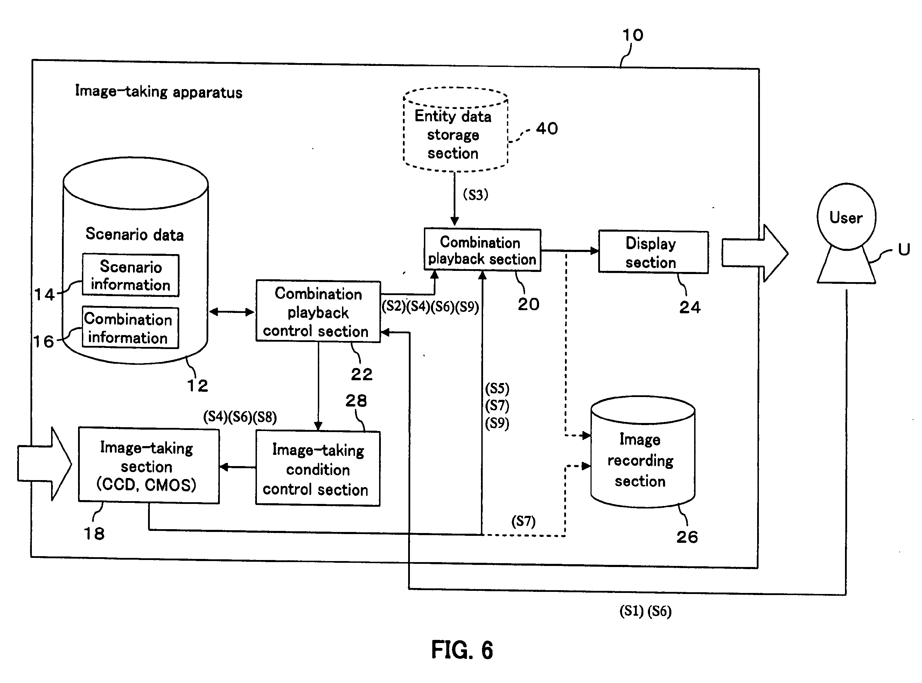

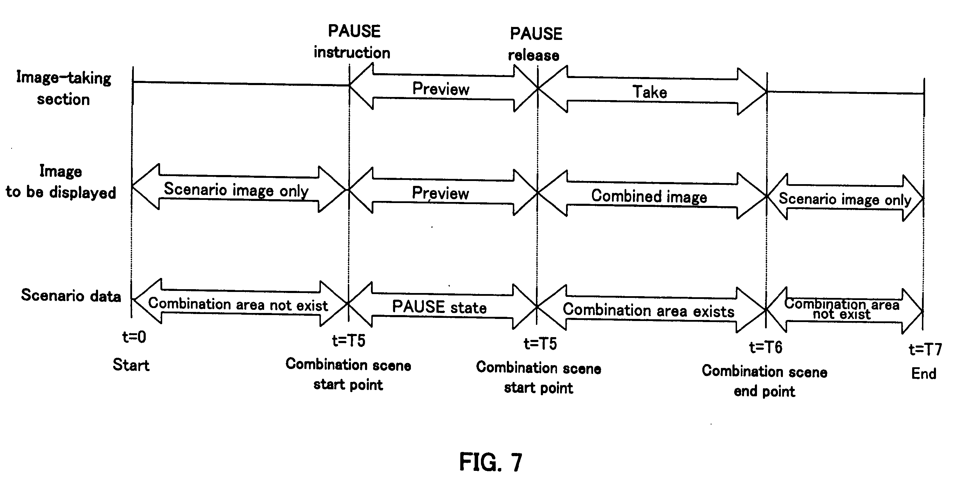

Figure 6 shows an operation flow of image combination by the image-taking apparatus 10, and Figure 7 shows a relation between an operation of an image-taking section 18, a display of the display section 24, and scenario data at the time of image combination. In Figure 7, the horizontal axis indicates time, which progresses from left to right.

First, a user instructs the image-taking apparatus 10 to start a playback of a scenario image (step S1). The instruction to start a playback of a scenario image is inputted to the combination playback control section 22. The combination playback control section 22 controls the combination playback section 20 (step S2), which allows the combination playback section 20 to play back a scenario image. That is, the combination playback section 20 reads the scenario information 14 from an entity data storage section 40 and plays back a scenario image based on the scenario information 14 (step S3). The entity data storage section 40 may be located anywhere, and is indicated by the dotted line in Figure 6. A scenario image is played back here according to the scenario data shown in Figure 2. That is, a time period for which a combination area appears in a scenario image is from time T5 to time T6. As shown in Figure 7, from time T0 to time T5, the scenario data does not include combination information and just a scenario image is played back. Incidentally, the medium A and the medium B are played back from time t = 0 to time t = T7. That is, the start time of the medium A T1 and the start time of the medium B T3 is time t =0, and the end time of the medium A T2 and the end time of the medium B T4 is time t = T7.

The combination playback control section 22 plays back a scenario image by means of the combination playback section 20 while managing appearance timing of a combination area based on the combination information 16 read from the scenario storage section 12. On appearance timing of a combination area (time T5), the combination playback control section 22 instructs the combination playback section 20 to cause a playback of a scenario image to pause (step S4). The combination playback control section 22 further instructs the image-taking condition control section 28 to shoot in preview mode (a mode of displaying a taken image on a screen without recording it). The image-taking condition control section 28, according to an instruction from the combination playback control section 22, controls the image-taking section 18 and starts shooting in preview mode (step S4).

In a case where the combination information 16 includes information about an image-taking condition at this time, the image-taking condition control section 28 controls the image-taking section 18 based on the image-taking condition. This allows obtaining a taken image which matches a scenario image. For example, in a case where a scenario image is in a sepia tone and if the creator of the scenario image thinks it desirable that an image to be combined is in a sepia tone as well, the combination information 16 is made to include an image-taking condition that it be in a sepia tone. The image-taking condition control section 28 controls the image-taking section 18 under the image-taking condition included in the combination information 16 and obtains a taken image in a sepia tone.

An image taken by the image-taking section 18 is sent to the combination playback section 20, which combines the taken image and a scenario image (step S5). Specifically, a scenario image at time T5 is displayed on the display section 24 as a still image. The taken image is combined with a combination area included in the scenario image, so that a combined image is made. This combined image is a combined image preview. As shown in Figure 7, the playback of a scenario image is caused to pause at time T5, and the combined image preview is displayed on the display section 24.

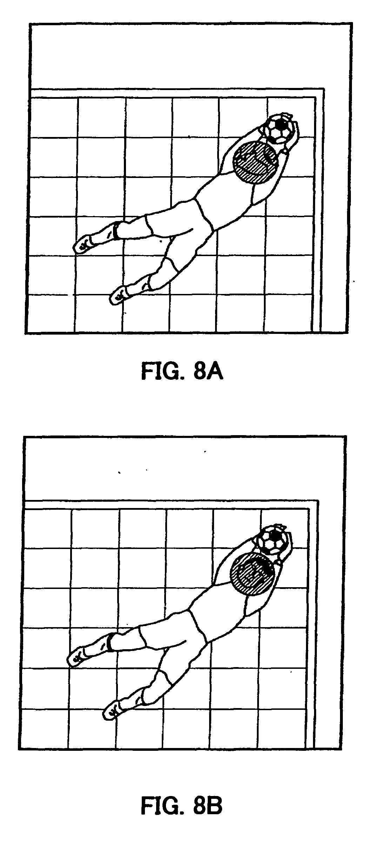

Figures 8A and 8B shows examples of a combined image preview. A playback of a scenario image has been stopped, and a still image is displayed. A taken image obtained by the image-taking section 18 is displayed in a combination area. If the image-taking apparatus 10 is moved, an image to be obtained by the image-taking section 18 changes, so that an image to be combined with the combination area changes as shown in Figures 8A and 8B.

While viewing a combined image preview, a user adjusts a position, orientation, zoom ratio, brightness, etc. of the image-taking apparatus 10 so that a desired image is placed in a combination area. For example, a scenario image in the example shown in Figures 8A and 8B is an image at the moment that a keeper catches a ball. A combination area is located at the face part of the keeper, and an image taken by the image-taking section 18 is inserted into the combination area. The taken image in Figure 8A is a ball and leg, which is not appropriate as an image to be combined with the scenario image. The image-taking apparatus 10 is thus moved to change the part to be taken, so that an image of a face is taken. This allows obtaining a combined image appropriate to the scenario image as shown in Figure 8B. In this way, displaying a combined image preview allows a user to adjust an image to be obtained by the image-taking section 18.

Next, a user instructs the image-taking apparatus to release a pause. This instruction is given, for example, when a user judges that a desired image for a combination area has been combined. An instruction to release a pause is inputted to the combination playback control section 22 (step S6). The combination playback control section 22 instructs the combination playback section 20 to resume a playback of a scenario image, and instructs the image-taking condition control section 28 to shoot in recording mode (step S6). As can be seen in Figure 7, pause instruction time is the same as pause release time t, i.e. T5, and time in scenario data is suspended. In the meanwhile, actual time is passing.

An image taken by the image-taking section 18 is sent to the combination playback section 20, and is combined with a scenario image (step S7). Specifically, the taken image is inserted into a combination area included in the scenario image, so that a combined image is made. Incidentally, in a case where the image-taking section 18 takes a moving image and if, for example, a subject moves, an image to be inserted into a combination area changes.

In a case where a combination area in a scenario image is created to move with the progress of the scenario image, a combined image in which a position of a taken image to be combined moves can be made. In a case where part of a taken image is clipped to be combined with a combination area and if the clip position is fixed, sight of the same object is caught as a subject without movement of the image-taking apparatus while a combined image, in which the combination area into which the image of the object is inserted moves in a scenario image, can be made. In a case where part of a taken image is clipped to be combined with a combination area, the clip position can be moved to follow the position of the combination area.

The combination playback section 20 then displays a combined image on the display section 24. On the other hand, the image-taking section 18 sends a taken image to the image recording section 26 and records it in the image recording section 26 as shown by a broken arrow in Figure 6 (step S7). At this time, the taken image is recorded with identification information of a scenario image being played back. The association of a taken image with a scenario image makes it possible that, when a combined image is played back, the taken image and the scenario image associated with the taken image are combined and that the combined image displayed on a screen at the time of shooting is played back.

Another method can be adopted for recording in the image recording section 26. That is, as shown by a broken arrow in Figure 6, not a taken image from the image-taking section 18 but a combined image outputted from the combination playback section 20 is recorded in the image recording section 26.

The combination playback control section 22, based on the combination information 16 read from the scenario storage section 12, manages timing of when a combination area ends its appearance. When T6, time that a combination area disappears from a scenario image, comes, the combination playback control section 22 instructs the image-taking condition control section 28 to end shooting. As a result, the image-taking condition control section 28 ends shooting by the image-taking section 18 (step S8). When T7, an end time of a playback of a scenario image, comes, the combination playback control section 22 informs the combination playback section 20 of the end of the playback of the scenario image (step S9).

The above described is an operation example of the image-taking apparatus 10 of the first embodiment.

In the image-taking apparatus 10 of the first embodiment, scenario data has the combination information 16 for combining a taken image. Under control, based on the combination information 16, of the combination playback control section 22, the combination playback section 20 combines an image taken by the image-taking section 18 and a scenario image to make a combined image, and displays the combined image on the display section 24. This allows combining a scenario image and a taken image during shooting. A taken image and a scenario image are thus speedily combined, so that a combined image can be obtained. In addition, since a combined image is displayed on the display section 24 while an image to be combined is being taken, a user can view a combined image and can adjust an image to be combined at the time of shooting. That is, shooting an object to be combined by the image-taking section 18 during a playback of a scenario image allows a taken image to be combined as it is. Images can be combined easily without requiring such time and effort as that an image once taken is played back later, then an object to be combined is clipped from the taken image, and then the image is combined in exact timing with a playback of a scenario image. Especially, in a case where a screen or keypad has its limits as is the case with a portable device for example, since it is difficult to play back both a scenario image and a taken image and to edit them, effective is a method in which a scenario image is displayed on the display section 24 while a taken image is adjusted by the image-taking section 18.

By the way, in the above embodiment, though a playback of a scenario image is resumed on an instruction from a user to play back a scenario image, it may be resumed after a certain lapse of time from a time point when a scenario image is caused to pause. A means for judging details of an image being taken may be comprised so that a playback is automatically resumed when the means judges that the taken image is an image to be placed in a combination area. For example, in examples shown in Figures 8A and 8B, if the image-taking apparatus 10 is equipped with a routine to recognize a face, a playback of a scenario image can be resumed when it is judged that a face image has been combined with a combination area.

In the above embodiment, a configuration in which a taken image to be combined with a combination area is overlaid on a scenario image is described as an image combination method. However, another combination method can be adopted. For example, in a case where the transparent gif format capable of assigning a transparent color is used for an image composing a scenario image, a combined image may be made by placing a taken image under a scenario image. In this case, an underlying taken image is displayed in a transparent color part of a scenario image.

Information on a rotation angle of a taken image may be included in combination information. This allows combining an image whose angle matches a scenario image without moving a camera. For example, in a case where a scenario image is a character doing a handstand and a taken image is to combined with the character's face area, a combined image can be made appropriately without having a subject do a handstand or shooting with a camera upside down if a configuration is adopted in which combination information includes information on a rotation angle (180 degrees) of a taken image and a taken image is turned and combined based on the information.

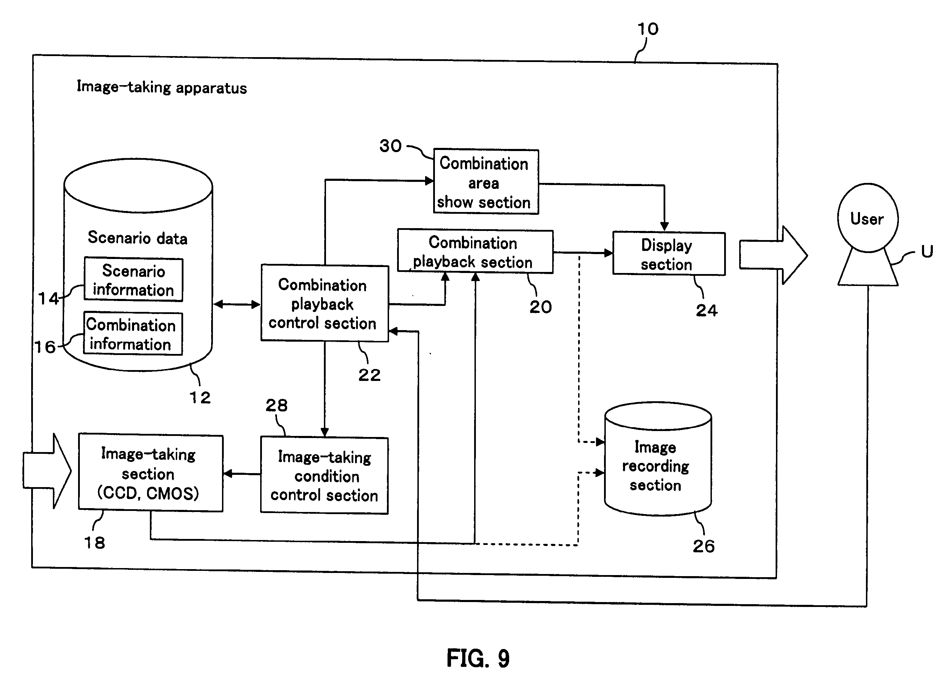

Figure 9 shows a configuration of an image-taking apparatus 10 of a second embodiment. A basic configuration of the image-taking apparatus 10 of the second embodiment is the same as that of the image-taking apparatus 10 of the first embodiment, except that the former further comprises a combination area show section 30 for showing information on an outer shape of a combination area. The combination area show section 30 has a function to show information on an outer shape of a combination area to a user based on combination information 16 before time when a combination area appears. Specifically, the combination area show section 30 displays, for example, an outer shape of a combination area by overlaying it on a scenario image as a frame. A frame is a line for making an outline of a combination area prominent, and this shows a shape and size of a combination area to a user.

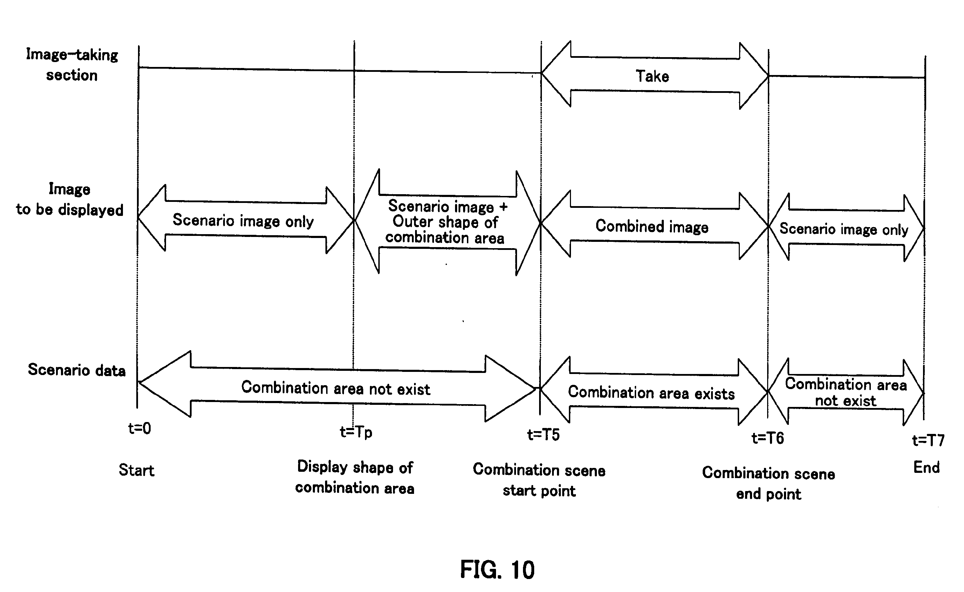

Figure 10 shows a relation, at the time of image combination, between an operation of an image-taking section 18, a display of a display section 24, and scenario data. An image combination operation by the image-taking apparatus 10 of the second embodiment will be described with reference to Figure 10. Just like in Figure 7, the horizontal axis in Figure 10 is a time axis.

First, a user instructs the image-taking apparatus 10 to start a playback of a scenario image. A scenario image is played back here according to the scenario data shown in Figure 2. That is, a time period for which a combination area appears in a scenario image is from time T5 to time T6. The medium A and the medium B are played back from time t = 0 to time t = T7. As shown in Figure 10, the scenario data does not include combination information from time T0 to time T5. An instruction to start a playback is inputted to a combination playback control section 22, which controls a combination playback section 20, so that a playback of a scenario image is started.

From a start of a playback of a scenario image to time T5, the image-taking apparatus 10 reads scenario information 14 by means of the combination playback section 20 to play back a scenario image. The combination playback control section 22, referring to the combination information 16, sends information on an outer shape of a combination area which is to appear at time T5 to the combination area show section 30 at time Tp which is before time T5. The combination area show section 30 displays a frame of a combination area by overlaying it on a screen of a scenario image currently displayed on the display section 24.

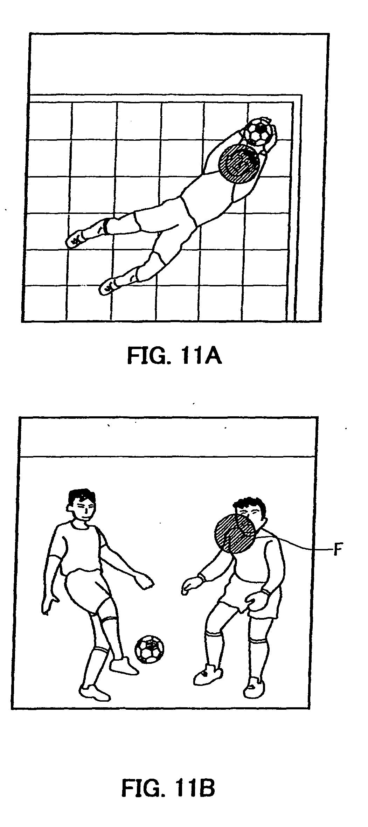

Figure 11A shows an example of a combined image at time T5, and Figure 11B shows an example of information, displayed on a screen, on an outer shape of a combination area. As shown in Figure 11A, the scenario image at time T5 is an image of a keeper who has caught a ball, and a circular combination area is located at the face part of the keeper. The image-taking apparatus 10 displays on the display section 24 the information on the outer shape of the combination area at a time point of time Tp before time T5 at which the combination area appears. That is, as shown in Figure 11B, the apparatus displays the outer shape of the combination area as a frame F by overlaying it on the scenario image. The image-taking apparatus 10 displays the information on the outer shape of the combination area from time Tp to time T5.

An operation of a playback of a scenario image and image combination after time T5 is the same as that of the image-taking apparatus 10 of the first embodiment. That is, after time T5, the combination playback control section 22 combines a scenario image and an image taken by the image-taking section 18 to make a combined image, and the image-taking apparatus 10 displays the combined image on the display section 24 by means of the combination playback section 20. Since there exists no combination area which appears after time T6 according to the combination information 16 of the scenario data, the image-taking apparatus 10 just plays back a scenario image by means of the combination playback section 20.

The above described is an operation example of the image-taking apparatus 10 of the second embodiment.

In the image-taking apparatus 10 of the second embodiment, since an outer shape of a combination area is displayed on a scenario image before the combination area appears and an image combination is started, a user can predict an image to be combined with the combination area based on the information on the outer shape of the combination area. This allows a user to prepare for taking an image to be combined.

In addition, as is the case with the image-taking apparatus 10 of the first embodiment, the image-taking apparatus 10 of the second embodiment can also combine a taken image and a scenario image while shooting, and can combine images speedily with easy operation.

In the above-described second embodiment, as shown in Figure 11B, the combination playback control section 22 also sends the combination area show section 30 information on a position where a combination area is displayed at the time of its appearance, so that a frame F showing an outer shape of the combination area is displayed at the position in a scenario image. Displaying position information in advance like this is effective for a configuration in which a position of a combination area in a scenario image at a combination start time and a position of part to be clipped in a taken image are made to correspond with each other. In another configuration, information on an outer shape of a combination area may be displayed anywhere on the display section 24. In a case where the image-taking apparatus 10 has a sub screen in addition to a screen for playing back and displaying a scenario image, information on an outer shape of a combination area can be displayed on the sub screen.

In the above-described second embodiment, information on an outer shape of a combination area is displayed with a frame F. However, information on an outer shape may be indicated with a display other than a frame F. For example, a scenario image within a combination area may be displayed lighter than the rest; without a frame being displayed. This also allows a user to know an outline of a combination area.

In the above-described second embodiment, information on an outer shape shown by the combination area show section 30 is displayed with a frame F which is equal in shape and size to a combination area that is to appear actually. However, Information only about a shape or size of a combination area may be shown by the combination area show section 30.

In the above-described second embodiment, information on an outer shape of a combination area is displayed. In addition to this, a taken image currently being caught by the image-taking section 18 may be displayed. Displaying a taken image being caught by the image-taking section 18 as above allows adjusting a position, orientation, zoom ratio, etc. of the image-taking section 18 in advance of image combination so that an appropriate image can be taken.

By the way, a method of displaying a scenario image currently being played back and an image taken by the image-taking section 18 together on one display section 24 includes, for example, a method in which a taken image is passed through a transparency process and is displayed on a scenario image. A taken image to be displayed on the display section 24 may be the whole of an image taken by the image-taking section 18 or may also be just part of a taken image to be combined. In the former case, for example, the whole of a taken image is passed through a transparency process and is superimposed and displayed on the whole of a scenario image. In the latter case, part of a taken image to be clipped from the taken image, is clipped from the taken image currently being taken, is passed through a transparency process, and is superimposed and displayed on a scenario image at a position of a combination area where the combination area is to appear at its start time. This allows a user to know a taken image to be actually combined, and also allows a user to know an outer shape and position of a combination area even if a frame is not displayed.

Incidentally, in the second embodiment in contrast to the first embodiment, a user cannot view before time T5 a time-T5 scenario image which is to be displayed with a combination area. For this reason, even if information on an outer shape of a combination area is displayed as above before time T5, there is a possibility that a user cannot make out what should be inserted there to match with a scenario image. Information on an attribute (e.g. a "face" etc.) of a combination area may be displayed from time Tp to time T5 (however, a user can choose a subject freely in disregard of this attribute).

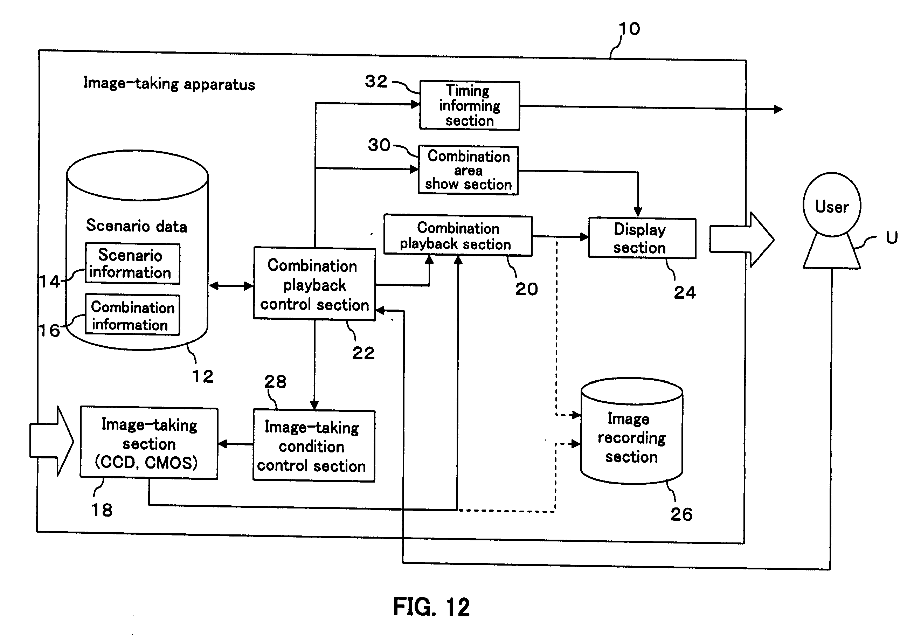

Figure 12 shows an image-taking apparatus 10 of a third embodiment of the invention. A basic configuration of the image-taking apparatus 10 of the third embodiment is the same as that of the image-taking apparatus 10 of the second embodiment, except that the former further comprises a timing informing section 32 for informing that appearance timing of a combination area has approached.

The timing informing section 32 detects an approach of an appearance time of a combination area based on information, included in the combination information 16, about time when a combination area appears and on an elapsed time from a start of a playback of a scenario. A configuration which informs by emitting a sound that an appearance time of a combination area is approaching, for example, can be adopted for the timing informing section 32. An approach of an appearance time of a combination area can be informed by making the sound louder or by making the sound interval shorter as the appearance time of the combination area approaches. Describing this with the example in Figure 10, for example, the timing informing section 32 informs a user, from time Tp when combination area information is shown, that an appearance time of a combination area is approaching.

This allows a user to know that an appearance time of a combination area is approaching, so that the user can prepare for taking an image to be combined.

The timing informing section 32 may inform that an appearance time of a combination area is approaching by a method other than sound. For example, a configuration in which an approach of appearance timing is informed by slowing down a playback speed of a scenario image, or a configuration in which countdown numbers are displayed on a screen can be adopted. In addition, also after an appearance time of a combination area, it may be informed continuously that it is immediately after an appearance time. This can encourage a user to take an image to be combined. In this case, a configuration in which sound pitch or sound volume is changed after an appearance time may be adopted.

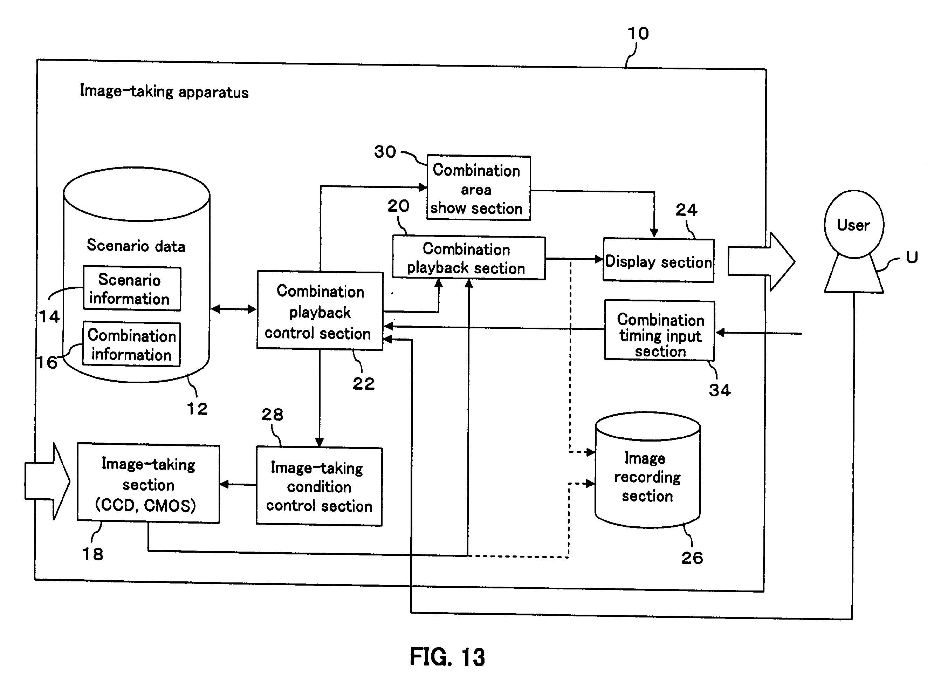

Figure 13 shows a configuration of an image-taking apparatus 10 of a fourth embodiment of the invention. A basic configuration of the image-taking apparatus 10 according to the fourth embodiment is the same as that of the image-taking apparatus 10 of the second embodiment, except that the former comprises a combination timing input section 34 for inputting an instruction to start and end an image combination. Timing information inputted from the combination timing input section 34 is sent to a combination playback control section 22. The combination playback control section 22 controls timing of a start or end of combining a taken image and a scenario image based on timing information from the combination timing input section 34.

This configuration, which comprises the combination timing input section 34 and allows input of an instruction to start and end an image combination, allows a user to choose timing of image combination. For example, a user can start a combination at a time point when a preparation for taking an image to be combined has been made, and can end a combination when the user has become unable to take an image to be combined.

In the image-taking apparatus 10 of the fourth embodiment, since a user can determine timing to start and end an image combination, determined timing sometimes differs from timing based on combination information at which a combination area appears. This will be described.

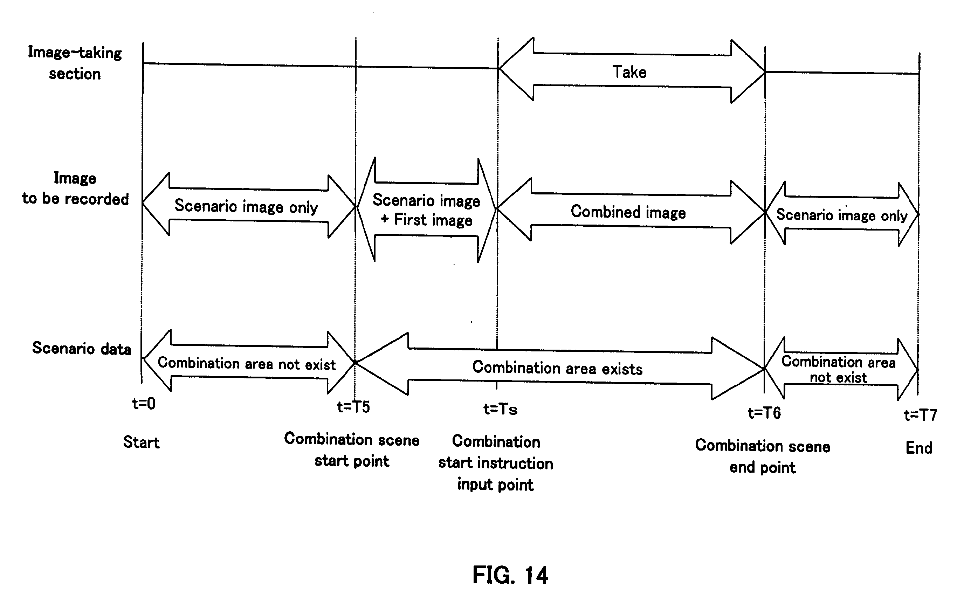

Figure 14 shows a relation, at the time of image combination, between an operation of an image-taking section 18, a display of a display section 24, and scenario data. An image combination operation by the image-taking apparatus 10 of the embodiment will be described with reference to Figure 14. Just like in Figure 7, the horizontal axis in Figure 14 is a time axis.

First, a user instructs the image-taking apparatus 10 to start a playback of a scenario image. A scenario image is played back here according to the scenario data shown in Figure 2. That is, a time period for which a combination area appears in a scenario image is from time T5 to time T6. The medium A and the medium B are played back from time t = 0 to time t = T7. As shown in Figure 14, from time T0 to time T5, the scenario data does not include combination information and a scenario image is played back. That is, an instruction to start a playback is inputted to the combination playback control section 22, which controls a combination playback section 20, so that a playback of a scenario image is started.

When time T5 comes, a combination area is displayed in a scenario image which is played back on a screen of the image-taking apparatus 10, and an image being taken by the image-taking section 18 is displayed in the combination area. However, at this time point, an image being displayed on the display section 24 is not recorded since a combination start instruction has not been inputted to the combination timing input section 34.

If a combination start instruction is inputted at time Ts, the image-taking apparatus 10 records in an image recording section 16 a taken image displayed in a combination area. The image-taking apparatus 10 also makes and records a combined image by combining a taken image (still image) at time Ts with the combination area for a time period from the combination area appearance time T5 to the combination start instruction time Ts. This allows complementing with a taken image at time Ts an image in a combination area which is before an input of a combination start instruction.

The above described is a method of complementing a combination area in a case where input timing of a combination start instruction is later than appearance timing of a combination area. In a case where complementing is done at the time of recording, a buffer is provided between the image recording section 26 and the combination playback section 20, a scenario image from time T5 to Ts accumulated in the buffer and a taken image inputted to the buffer first at time Ts are combined, and a combined image then obtained is recorded in the image recording section 26. Next, a complementing method for a case where a combination end instruction is inputted when a combination area still exists will be described.

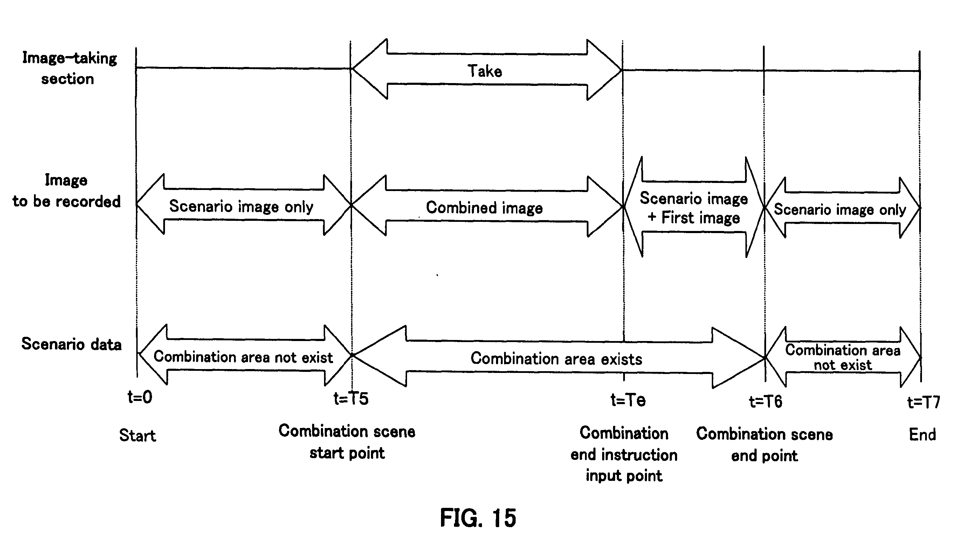

Figure 15 shows a relation, at the time of image combination, between an operation of the image-taking section 18, a display of the display section 24, and scenario data. An image combination operation by the image-taking apparatus 10 of the embodiment will be described with reference to Figure 15. Just like in Figure 7, the horizontal axis in Figure 15 is a time axis.

First, a user instructs the image-taking apparatus to start a playback of a scenario image. A scenario image is played back here according to the scenario data shown in Figure 2. That is, a time period for which a combination area appears in a scenario image is from time T5 to time T6. The medium A and the medium B are played back from time t = 0 to time t = T7. As shown in Figure 14, from time T0 to time T5, the scenario data does not include combination information and a scenario image is played back. That is, an instruction to start a playback is inputted to the combination playback control section 22, which controls the combination playback section 20, so that a playback of a scenario image is started.

When time T5 comes, a combination area is displayed in a scenario image which is played back on the screen of the image-taking apparatus 10, and an image taken by the image-taking section 18 is displayed in the combination area. After time T5, the image-taking apparatus 10 records in the image recording section 26 an image being combined on the screen.

If a combination end instruction is inputted at time Te before time T6 which is an endpoint of an appearance time period of the combination area, the image-taking apparatus 10 ends the recording of an image taken by the image-taking section 18. A combined image is made and recorded by combining a taken image (still image) at time Te with the combination area for a time period from the combination end instruction time Te to the combination area appearance end time T6. This allows complementing with a taken image at time Te an image in a combination area for a time period from an input of a combination end instruction to time T6 when a display of the combination area disappears.

In this way, in the case where input timing of a combination start instruction or combination end instruction is off an appearance time period of a combination area, complementing an image in the combination area for the time period allows avoiding a situation that no taken image is combined with the combination area.

In the above-described embodiment, an image in a combination area is complemented using an image taken at a time point of a combination start or end. However, an image in a combination area may be complemented by another method. A taken image can be so extended and recorded as to become equal in time length to an appearance time of a combination area. For example, in a case where an appearance time of a combination area is ten seconds whereas a playback time of a taken image is five seconds, the playback speed of the taken image can be reduced to half so that the length of the image matches the appearance time of the combination area.

In a case where a taken image and a scenario image are recorded separately, completing at time of playback as described above allows avoiding a situation that no taken image is combined with a combination area, so that a combined image can be played back appropriately.

The above described are examples of combining in accordance with an appearance time period described in combination information when a combination start instruction or combination end instruction is off an appearance time period of a combination area. However, combining may be done in accordance with a combination start instruction or combination end instruction. In this case, for a time period which is before an input of a combination start instruction or after an input of a combination end instruction and is within an appearance time period of a combination area, a scenario image that should have been hidden by the combination area is desirably displayed as it is, instead of displaying the combination area in blank.

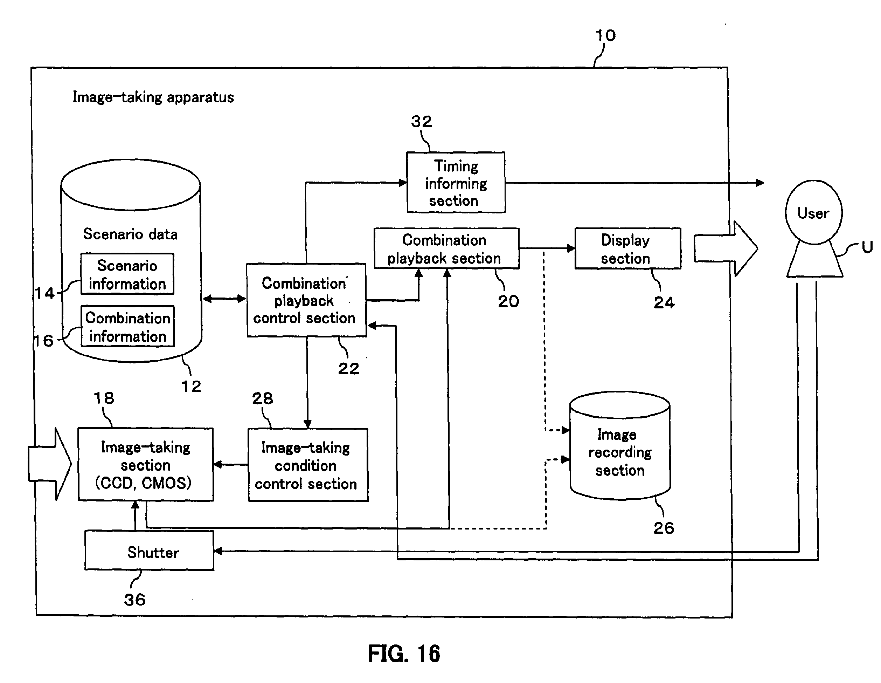

Figure 16 shows a configuration of an image-taking apparatus 10 of a fifth embodiment. A basic configuration of the image-taking apparatus 10 of the fifth embodiment is the same as that of the image-taking apparatus 10 of the first embodiment, except that the former combines a scenario image and a still image. The image-taking apparatus 10 of the fifth embodiment comprises a shutter 36. The shutter 36 is connected with an image-taking section 18. When the shutter 36 is released, the image-taking section 18 takes a still image at the release timing as an image to be recorded.

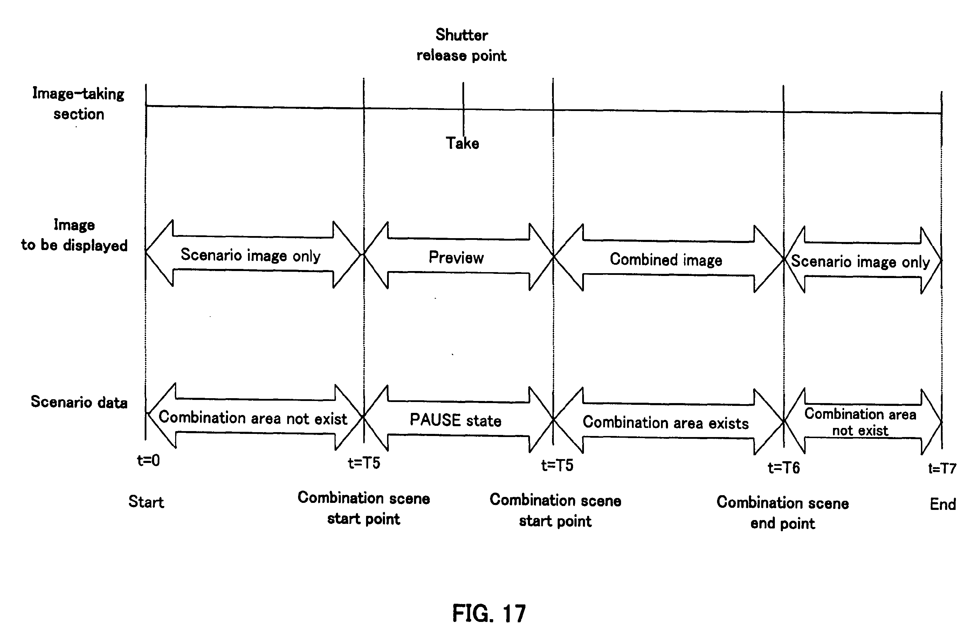

Figure 17 shows a relation, at the time of image combination, between an operation of the image-taking section 18, a display of the display section 24, and scenario data. An image combination operation by the image-taking apparatus 10 of the embodiment will be described with reference to Figure 17. Just like in Figure 7, the horizontal axis in Figure 17 is a time axis.

First, a user instructs the image-taking apparatus to start a playback of a scenario image. A scenario image is played back here according to the scenario data shown in Figure 2.

That is, a time period for which a combination area appears in a scenario image is from time T5 to time T6. The medium A and the medium B are played back from time t = 0 to time t = T7. As shown in Figure 14, from time T0 to time T5, the scenario data does not include combination information and a scenario image is played back. That is, an instruction to start a playback is inputted to a combination playback control section 22, which controls a combination playback section 20, so that a playback of a scenario image is started.

The image-taking apparatus 10 causes a playback of a scenario image to pause at time T5. At this time, a scenario image at time T5 is displayed on a screen. The scenario image includes a combination area. The combination playback control section 22 combines an image in the field of view of the image-taking section 18 and the scenario image caused to pause to make a combined image. The combination playback section 20 displays the combined image based on control by the combination playback control section 22. This combined image is a combined image preview. A position, orientation, or the like of the image-taking apparatus 10 is adjusted based on a combined image preview, and a still image to be combined is taken. The shutter 36 is released when a desired image is displayed in a combination area, so that a still image is obtained. After a still image is obtained, the playback of a scenario image is resumed. As for the resumption of the playback of a scenario image, the playback may be resumed when a user releases the shutter 36, or may be resumed after a certain lapse of time from a time point when the scenario image is caused to pause.

Upon resumption of the playback of a scenario image, the combination playback control section 22 combines the scenario image and a still image taken by the image-taking section 18 to make a combined image. Specifically, the combination playback section 20 under control of the combination playback control section 22 applies a process such as clipping, scaling, or the like to the obtained still image, and combines the processed image with a combination area in a scenario image. The image-taking apparatus 10 then displays the combined image on the display section 24 by means of the combination playback section 20. In this case, as opposed to a case where a moving image is taken, a scenario image progresses while an image inserted into a combination area remains to be a still image. However, if position information of combination information is a function of time, a combined image into which the same still image is inserted moves as a scenario image progresses, as is the case with a moving image. The combination playback control section 22 controls the combination playback section 20 to combine a taken image and a scenario image while a combination area exists in the scenario image. That is, the combination playback section 20 combines a taken image and a scenario image from time T5 to time T6.

According to the combination information 16 of the scenario data, no combination area appears after time T6. The image-taking apparatus 10 plays back a scenario image by means of the combination playback section 20.

The image-taking apparatus 10 records in the image recording section 26 an image of while a scenario image is being played back. As for a time period from time T5 to time T6, a combined image is recorded either by a method of recording an output from the combination playback section 20 or by a method of recording a taken still image. Incidentally, a combined image preview is not recorded.

The above described is the operation of the image-taking apparatus 10 of the fifth embodiment. Though a case of a still image has been described here based on the operation example of the first embodiment, it is of course possible to apply to combining a still image the operation example of the second embodiment, the timing informing of the third embodiment, or the complementing methods of the fourth embodiment.

The image-taking apparatus 10 of the fifth embodiment can speedily combine a taken still image and a scenario image to obtain a combined image.

In addition, since a combined image is displayed on the display section 24 while an image to be combined is being taken, a user can view a combined image and can adjust an image to be combined at the time of shooting. That is, shooting an object to be combined by the image-taking section 18 during a playback of a scenario image allows a taken image to be combined as it is. In this way, images can be combined easily without requiring such time and effort as that an image once taken is played back later, and then an object to be combined is clipped from the taken image and is combined in exact timing with a playback of a scenario image. Especially, in a case where a screen or keypad has its limits as is the case with a portable device for example, since it is difficult to play back a scenario image while displaying a taken still image and to edit them, effective is a method in which a scenario image is displayed on the display section 24 while a taken image is adjusted by the image-taking section 18.

In the above-described image-taking apparatus 10 of the fifth embodiment, a still image may be taken multiple times.

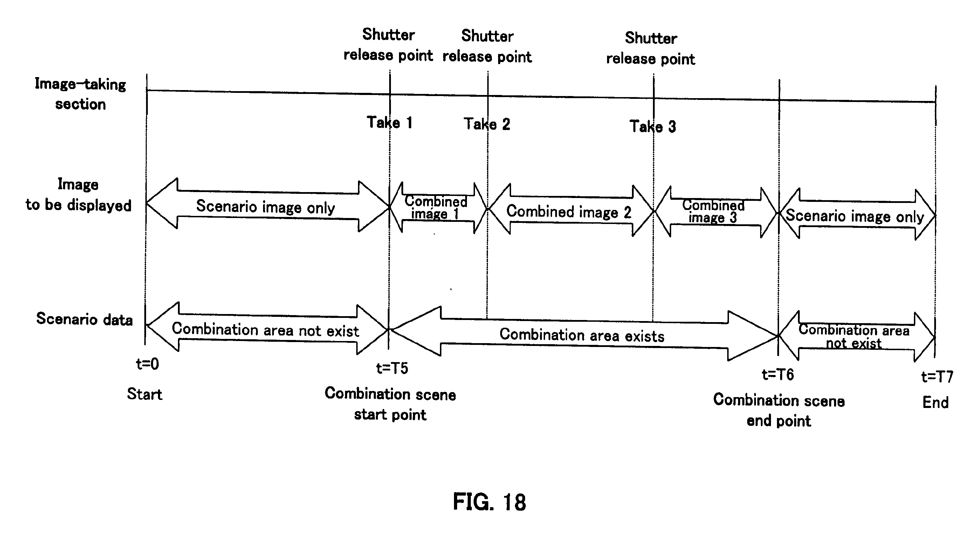

Figure 18 illustrates an image combination in a case where a still image is taken multiple times. Just like in Figure 7, the horizontal axis in Figure 18 is a time axis. As shown in Figure 18, a still image taken at a first shooting and a scenario image are combined and the combined image is displayed after the first shooting until a second shooting. Then, a still image taken at the second shooting and a scenario image are combined and the combined image is displayed after the second shooting until a third shooting. And then, a still image taken at the third shooting and a scenario image are combined and the combined image is displayed after the third shooting until an end of an appearance time period of a combination area. This allows a plurality of still images to be displayed in a combination area in a scenario image just like a slideshow.

While a still image taken at an nth shooting and a scenario image are combined and the combined image is recorded in the image recording section 26 after the nth shooting until an n+lth shooting, an image obtained by combining a preview image in the field of view of the image-taking section 18 and a scenario image may be displayed on the display section 24. This allows a user to go on with a playback of a scenario image while preparing for the next (n+1th) shooting with reference to a displayed preview image.

Incidentally, in a case where a still image is taken multiple times, all the still images do not always have to be used. For example, a user may be allowed to choose from a plurality of still images an image to be used for a combination, or a combined image may be made and recorded by using a last-taken still image. In a case where a last-taken still image is to be combined, ending shooting at a time when a best shot is taken allows a user to make a combined image with the best-shot still image. In a case, for example, referring to Figure 18, where a user chooses after an end of a combined scene a still image of a take 2 from still images of takes 1 to 3 accumulated in a buffer, a scenario image from time T5 to time T6 and the still image of the take 2 are combined at the choosing time T6 or at a playback end time of a scenario image T7, and a combined image then obtained is recorded in the image recording section 26. Alternatively, at times of shooting, the still images of the takes 1 to 3 may be recorded in the image recording section 26 separately from a scenario image (in association with identification information of a scenario image, however), and at time of playback a still image chosen from them by a user and a scenario image may be combined while being played back.

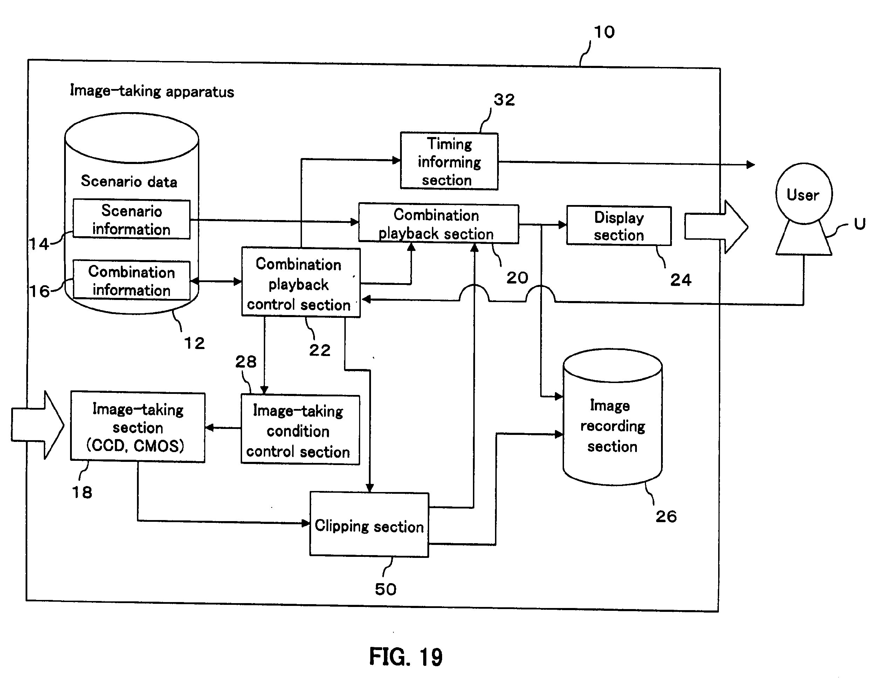

Figure 19 shows an image-taking apparatus 10 of a sixth embodiment of the invention. A basic configuration of the image-taking apparatus 10 of the sixth embodiment is the same as that of the image-taking apparatus 10 of the third embodiment, except that the former comprises a clipping section 50 for clipping part of a taken image.

The clipping section 50 has a function to clip, as a partial image, part of a taken image taken by an image-taking section 18. The clipping section 50 clips a partial image according to combination information 16 stored in a scenario storage section 12.

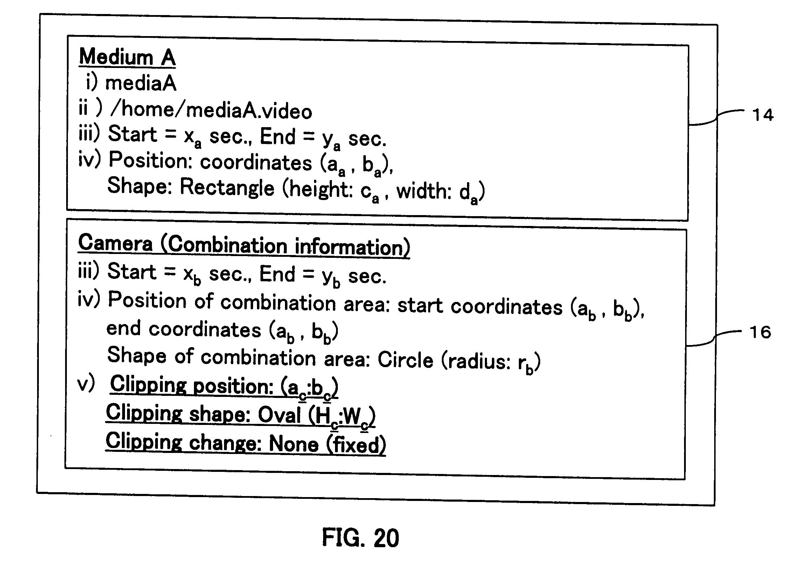

Figure 20 shows an example of scenario data stored in the scenario storage section 12. As is the case with the above-described embodiment, the scenario data includes scenario information 14 and the combination information 16. The combination information 16 includes information which defines a combination area, and clipping information for clipping a partial image from a taken image. Described in the example shown in Figure 20 are pieces of information, i.e. a "clipping position" which specifies a position to clip from a taken image, a "clipping shape" which defines a clip shape, and a "clipping change" which indicates a change in a partial image.

An operation of the image-taking apparatus 10 of the sixth embodiment will be described next. A basic operation of the image-taking apparatus 10 of the sixth embodiment is the same as that of the image-taking apparatus 10 of the above-described embodiment, except that the former combines a partial image clipped from a taken image by the clipping section 50 and a scenario image. Now, the operation of the image-taking apparatus 10 of the sixth embodiment will be described.

First, a combination playback control section 22 reads the combination information 16 from the scenario storage section 12, and passes the clipping information included in the combination information 16 to the clipping section 50. The clipping section 50 receives a taken image from the image-taking section 18 and clips a partial image from the received taken image. Specifically, it clips from a taken image an area whose position and shape are specified in the clipping information passed from the combination playback control section 22, as a partial image.

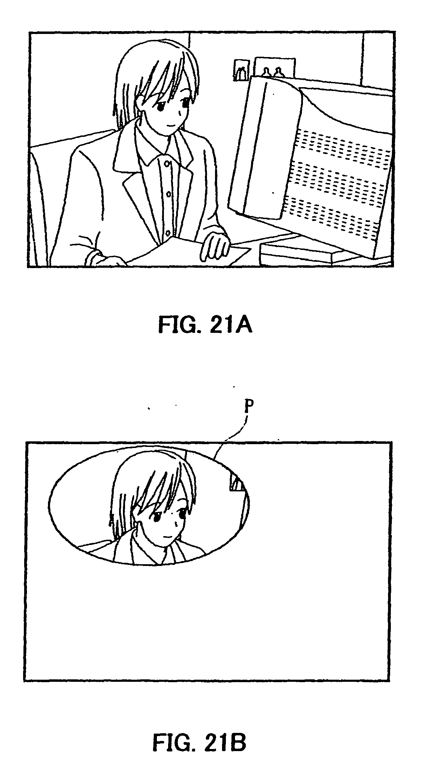

Figure 21A shows an example of a taken image, and Figure 21B shows an example of a partial image. In a case where a clipping shape is described as "oval" like the example shown in Figure 20, an oval-shaped partial image P like the one shown in Figure 21B is clipped from the taken image shown in Figure 21A.

The clipping section 50 passes a partial image clipped from a taken image to a combination playback section 20. The combination playback control section 22 reads scenario information 14 from the scenario storage section 12, and passes the read scenario information 14 to the combination playback section 20. The combination playback section 20 combines a partial image passed from the clipping section 50 with a combination area in a scenario image. The combination playback section 20 then sends a combined image to a display section 24 and an image recording section 26. The display section 24 displays a combined image sent from the combination playback section 20. The image recording section 26 records a combined image sent from the combination playback section 20.

The above described is the image-taking apparatus 10 of the sixth embodiment of the invention.

Since the image-taking apparatus 10 of the sixth embodiment comprises the clipping section 50 and a partial image clipped from a taken image by the clipping section 50 is combined with a scenario image, part of a taken image can be combined with a scenario image.

In addition, since the clipping section 50 clips a partial image according to clipping information described in the combination information 16, which part is to be clipped as a partial image can be defined by combination information. In the above sixth embodiment, the clipping information specifies a position and shape of a partial image to be clipped. However, a partial image may be specified otherwise.

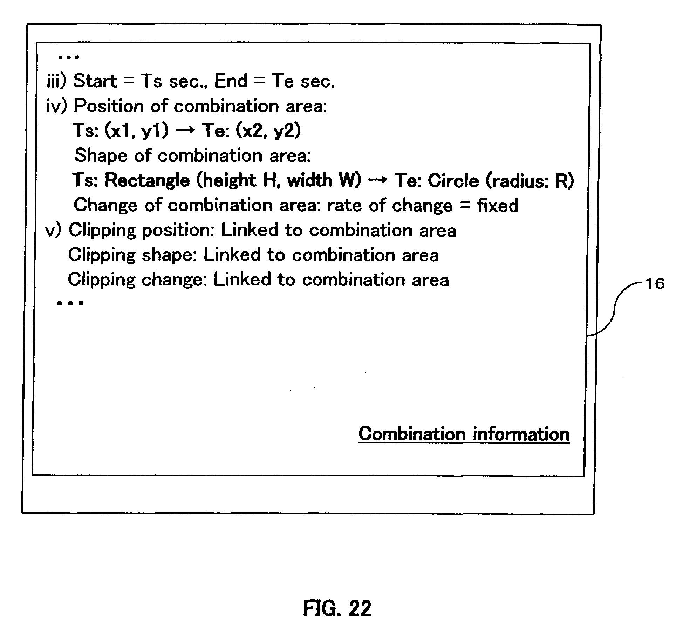

Figure 22 shows another example of combination information which describes clipping information. As shown in Figure 22, a partial image to be clipped can be defined as an area linked to a combination area.

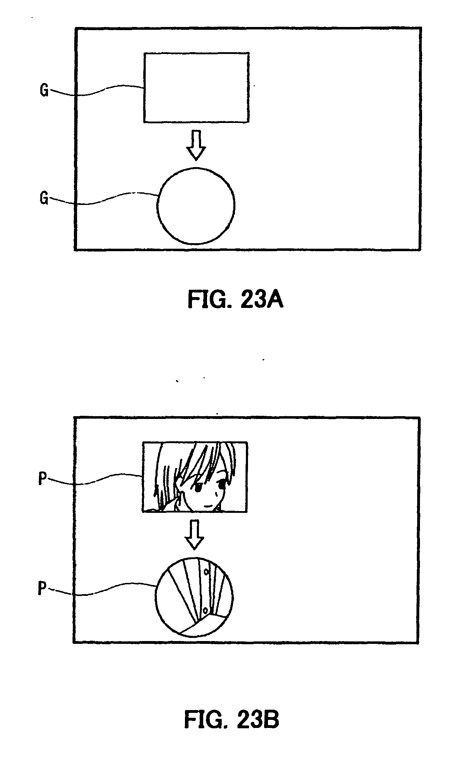

Figure 23A shows a change in position and shape of a combination area, and Figure 23B shows a partial image which is clipped from a taken image (see Figure 21A) being linked to the combination area. In a case where a partial image to be clipped is defined as linked to a combination area, if a combination area G moves changing in shape from a rectangle to a circle as shown in Figure 23A, a partial image to be clipped from the taken image shown in Figure 21A, with linkage to the change, changes like a partial image P shown in Figure 23B. In this configuration, a partial image to be clipped from a taken image is linked to a combination area, so that a combined image which seems as if the taken image were being looked through the combination area can be obtained. This can improve the expressiveness of contents to be combined.

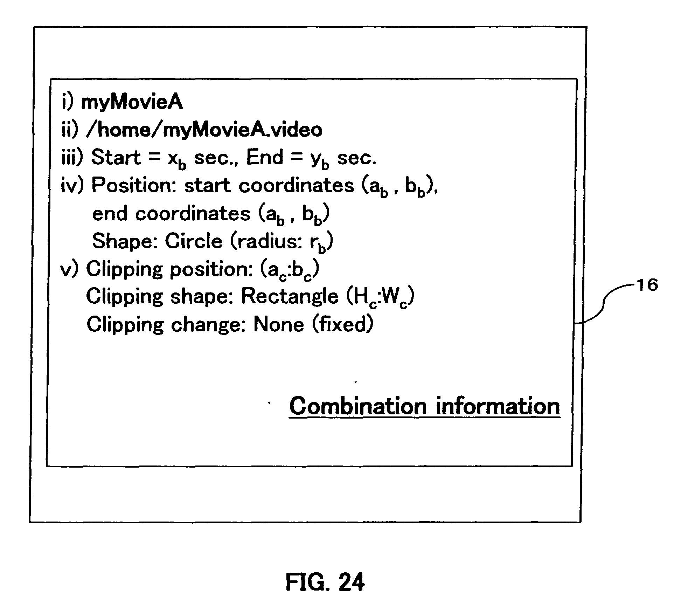

Described in the above sixth embodiment is an example where data to be recorded in the image recording section 26 is a combined image combined by the combination playback section 20. However, a taken image may be recorded in the image recording section 26. In this case, the clipping section 50 sends a partial image clipped from a taken image to the combination playback section 20 on one hand and sends the taken image to the image recording section 26 on the other. This allows a partial image and a scenario image to be combined by the combination playback section 20, a combined image to be displayed on the display section 24, and a taken image to be recorded in the image recording section 26. At this time, i) an identifier and ii) storage location of a taken image to be combined is recorded in combination information of scenario data as shown in Figure 24. When a combined image is played back using the combination information 16 shown in Figure 24, a taken image indicated by i) an identifier recorded in scenario data is read from the image recording section 26 and is combined with a scenario image by the combination playback section 20 using the combination information 16 while being played back, so that a combined image can be reproduced.

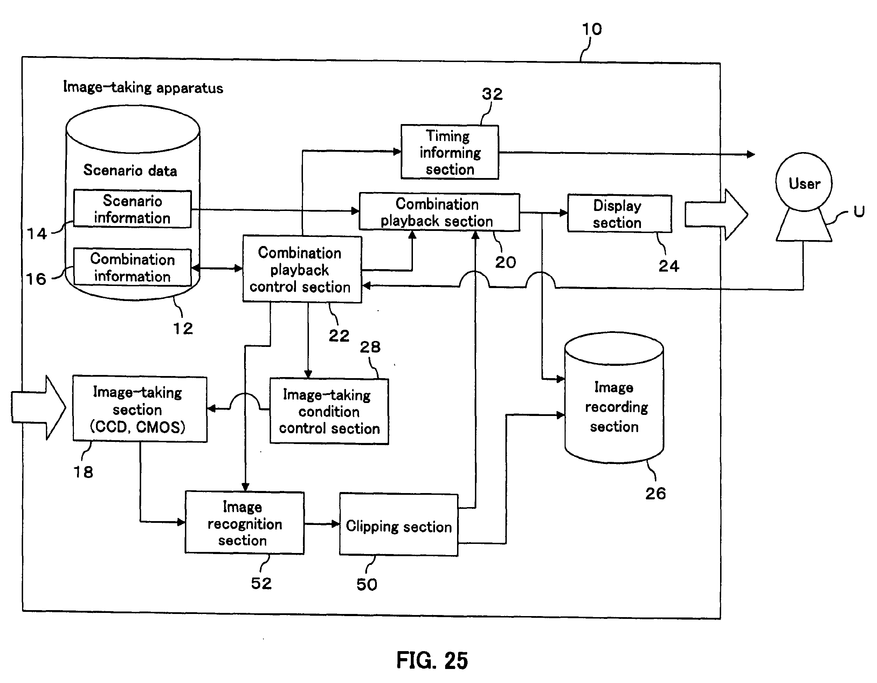

Figure 25 shows a configuration of an image-taking apparatus 10 of a seventh embodiment. A basic configuration of the image-taking apparatus 10 of the seventh embodiment is the same as that of the image-taking apparatus 10 of the sixth embodiment. But, unlike in the image-taking apparatus 10 of the sixth embodiment, in the image-taking apparatus 10 of the seventh embodiment, a partial image to be clipped from a taken image is defined by specifying the kind of an object to be included in a taken image. Along with this, the image-taking apparatus 10 of the seventh embodiment further comprises an image recognition section 52.

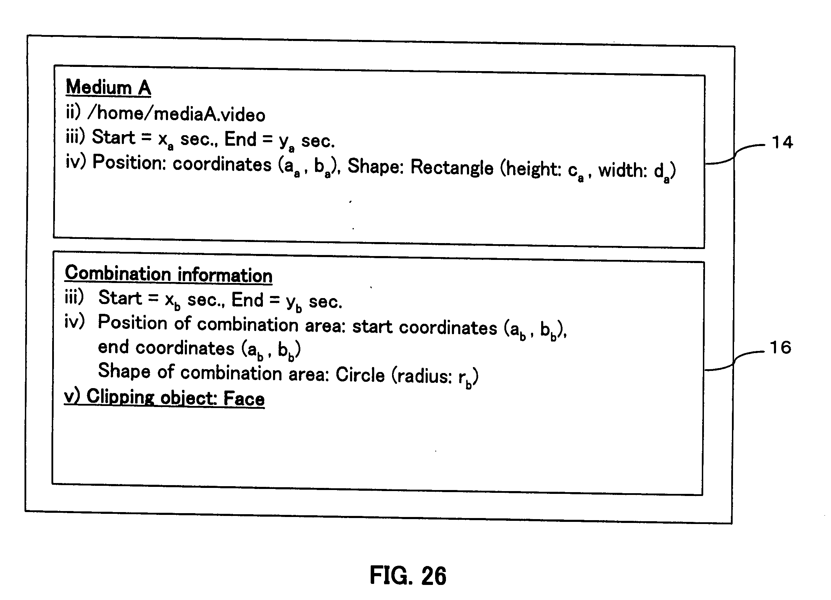

Figure 26 shows an example of scenario data of the seventh embodiment. As is the case with the above-described embodiment, the scenario data includes scenario information 14 and combination information 16. The combination information 16 includes information which specifies a combination area, and clipping information for clipping a partial image. The clipping information specifies a partial image by specifying an object included in a partial image. Information on an object to specify a partial image is hereinafter referred to as a "clipping object." Described in the example shown in Figure 26 is that a part which includes a clipping object "face" is to be clipped from a taken image as a partial image.

Returning to Figure 25, the image recognition section 52 has a function to perform image recognition on a taken image taken by an image-taking section 18 to distinguish a clipping object displayed in the taken image. The image recognition section 52 passes the clipping section 50 information on an area in which a clipping object is displayed.

An operation of the image-taking apparatus 10 of the seventh embodiment will be described next. A basic operation of the image-taking apparatus 10 of the seventh embodiment is the same as that of the image-taking apparatus 10 of the sixth embodiment, except that the former determines by the image recognition section 52 an area to be clipped by the clipping section 50.

First, a combination playback control section 22 of the image-taking apparatus 10 reads the combination information 16 from scenario data stored in a scenario storage section 12, and obtains information on a clipping object which specifies a partial image. The combination playback control section 22 then passes the information on a clipping object to the image recognition section 52.

The image recognition section 52 distinguishes, in a taken image taken by the image-taking section 18, an area in which a clipping object is displayed, and passes information on the area to the clipping section 50. The clipping section 50 clips as a partial image an area indicated by information passed from the image recognition section 52.

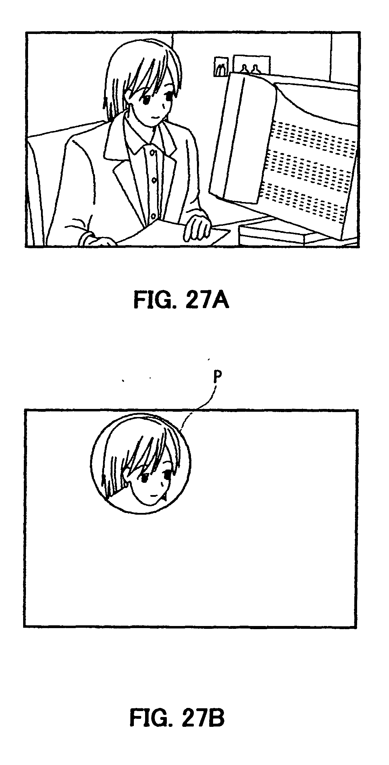

Figure 27A shows an example of a taken image, and Figure 27B shows an example of a partial image. In a case where a clipping object is specified as a "face" by the combination information 16, an area in which a "face" is displayed in the taken image shown in Figure 27A is distinguished, and an area including a "face" is clipped as a partial image P as shown in Figure 27B. In this example, a circular area including a "face" is clipped as a partial image. However, a shape of an area for clipping an image including a clipping object is not limited to a circle. For example, a rectangular area may be clipped, or an area which matches a shape of a clipping object may be clipped.

The clipping section 50 then passes a partial image clipped from a taken image to a combination playback section 20. The combination playback section 20 combines a partial image passed from the clipping section 50 with a combination area in a scenario image. The combination playback section 20 then sends a combined image to a display section 24 and an image recording section 26. The display section 24 displays a combined image sent from the combination playback section 20. The image recording section 26 records a combined image sent from the combination playback section 20.

Since the image-taking apparatus 10 of the seventh embodiment specifies a partial image by specifying a clipping object to be included in a partial image, a partial image to be clipped can be specified easily. In addition, the image recognition section 52 of the image-taking apparatus 10 distinguishes an area in which a clipping object is displayed, so that an area in which a clipping object is included can be clipped.

Moreover, as is the case with the image-taking apparatus 10 of the sixth embodiment, since the image-taking apparatus 10 of the seventh embodiment combines a partial image clipped by the clipping section 50 and a scenario image, part of a taken image can be combined with a scenario image. In the above image-taking apparatus 10 of the seventh embodiment, a configuration is described in which a scenario image and a partial image clipped from a taken image are combined and the combined image is recorded in the image recording section 26. However, as described in the sixth embodiment, the taken image itself can be recorded in the image recording section 26.

An image-taking apparatus 10 of an eighth embodiment of the invention will be described next. A basic configuration of the image-taking apparatus 10 of the eighth embodiment is the same as that of the image-taking apparatus 10 of the seventh embodiment (see Figure 25), except for contents of combination information 16 stored in a scenario storage section 12. In addition, an image recognition section 52 has a function to distinguish an object from a taken image and to distinguish an object from a scenario image.

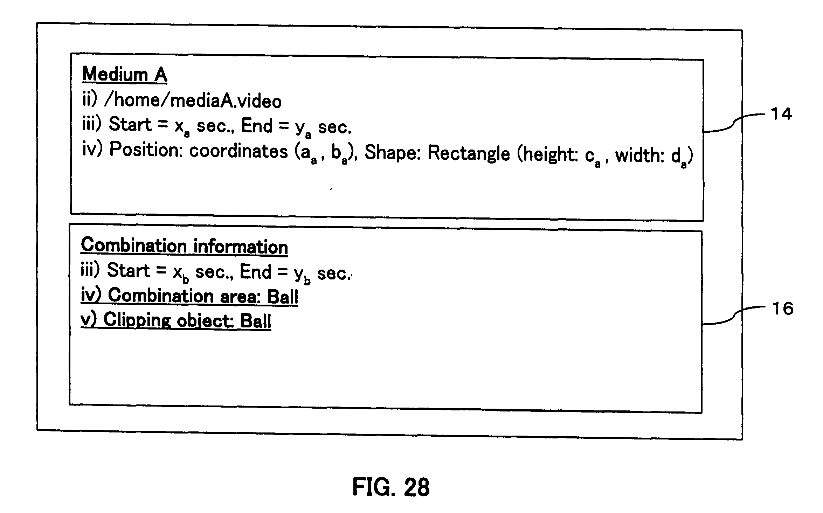

Figure 28 shows an example of scenario data stored in a scenario storage section 12 of the image-taking apparatus 10 of the eighth embodiment. The combination information 16 of the scenario data defines a combination area by specifying an object to be included in a combination area. In this example, an area, in a scenario image, in which a "ball" is displayed is specified as a combination area for a time period from t = Xb to t = Yb. Also in the combination information 16, as is the case with the seventh embodiment, a partial image is specified by a clipping object "ball" which is to be included in a partial image. An operation of the image-taking apparatus 10 of the eighth embodiment will be described next.

First, a combination playback control section 22 of the image-taking apparatus 10 reads scenario information 14 and the combination information 16 from the scenario data stored in the scenario storage section 12, and obtains information on an object to specify a combination area. The combination playback control section 22 then passes the scenario information 14 to a combination playback section 20. The combination playback section 20 passes a scenario image along with information on an object to specify a combination area to the image recognition section 52. The image recognition section 52 distinguishes an area, in a scenario image, in which an image of an object is displayed, and passes information on the area, as combination area information, to the combination playback control section 22. For example, the image recognition section 52 passes information on a position and shape of a combination area to the combination playback control section 22. The combination playback control section 22 then passes combination area information to the combination playback section 20.

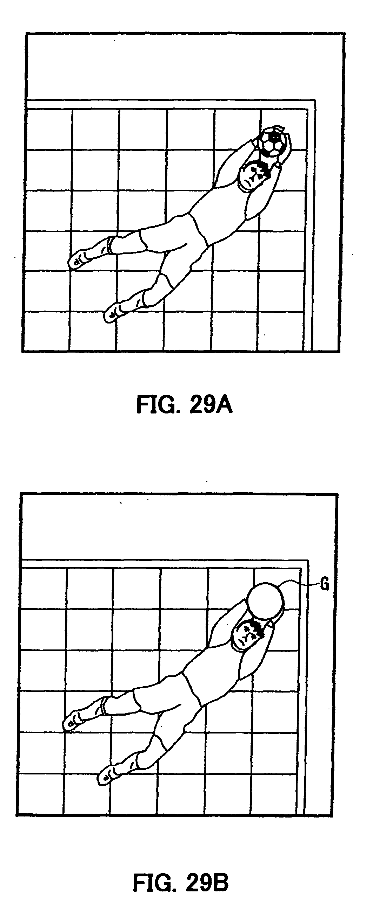

Figure 29A shows an example of a scenario image, and Figure 29B shows a combination area in a scenario image. In a case where the combination information 16 specifies that a combination area include an object "ball," an area, in the scenario image shown in Figure 29A, in which a "ball" is displayed is distinguished, and the area including a "ball" becomes a combination area G as shown in Figure 29B.

The combination playback section 20, based on combination area information passed from the combination playback control section 22, combines a partial image passed from a clipping section 50 and a scenario image. A process for clipping part of a taken image as a partial image by the clipping section 50 is the same as that of the image-taking apparatus 10 of the seventh embodiment. The combination playback section 20 then sends a combined image to a display section 24 and an image recording section 26. The display section 24 displays a combined image sent from the combination playback section 20. The image recording section 26 records a combined image sent from the combination playback section 20.

In the image-taking apparatus 10 of the eighth embodiment, a combination area can be specified easily by specifying an object to be included in a combination area.

Described in the above eighth embodiment is an example where a partial image to be clipped from a taken image is defined by an object. However, as described in the sixth embodiment, clipping information may be defined by a position and shape of a clip area. Clipping information is not always required, so the combination information 16 need not include clipping information. In this case, the whole of a taken image taken by the image-taking section 18 is combined with a combination area specified by an object.

An image-taking apparatus 10 of a ninth embodiment of the invention will be described next. A basic configuration of the image-taking apparatus 10 of the ninth embodiment is the same as that of the image-taking apparatus 10 of the first embodiment, except for a function of a combination playback control section 22.

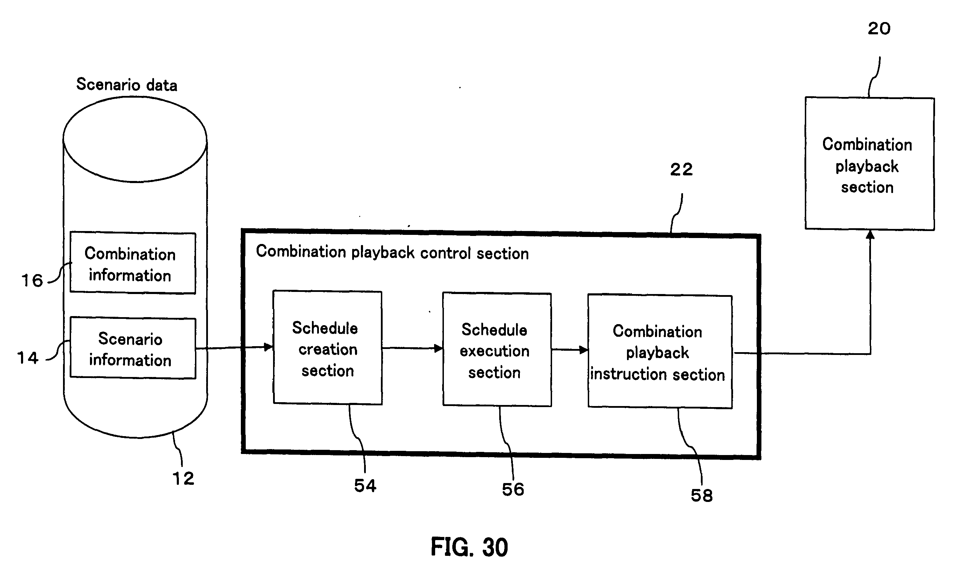

Figure 30 shows a configuration of the combination playback control section 22 of the ninth embodiment. As shown in Figure 30, the combination playback control section 22 has a schedule creation section 54, a schedule execution section 56, and a combination playback instruction section 58. The schedule creation section 54 has a function to create a schedule list of data, based on scenario information 14 read from a scenario storage section 12. The schedule execution section 56 has a function to extract a schedule for the current time from a schedule list created by the schedule creation section 54. The combination playback instruction section 58 has a function to instruct a combination playback section 20 to display a combination or to play back, based on a content of a schedule extracted by the schedule execution section 56.

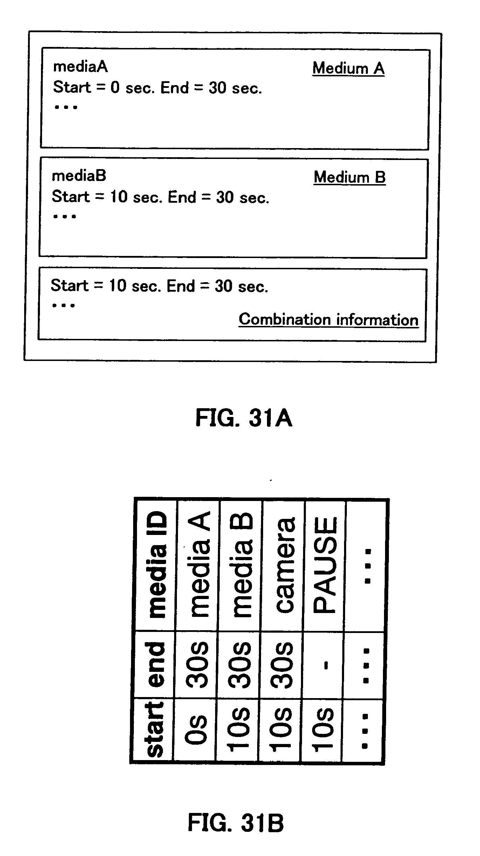

Figure 31A shows an example of scenario data, and Figure 31B shows a schedule list to be created from the scenario data shown in Figure 31A. In the ninth embodiment, a schedule which describes a process to cause a playback of a scenario image to pause at a combination start time (t = 10s in this example) is to be created (hereinafter referred to as a PAUSE schedule). In a case where there is a medium whose playback is to be started at the combination start time (hereinafter referred to as a simultaneous playback medium), a PAUSE schedule is added to a schedule list so that the PAUSE schedule is executed after the playback of the simultaneous playback medium is executed in due order.

Since this allows a scenario image to be caused to pause after a playback of a simultaneous playback medium is executed, the scenario image including the simultaneous playback medium can be displayed in a pause state. As a result, a user can take an appropriate image to be combined with the scenario image while viewing the displayed image.

An image-taking apparatus 10 of a tenth embodiment of the invention will be described next. A basic configuration of the image-taking apparatus 10 of the tenth embodiment is the same as that of the image-taking apparatus 10 of the first embodiment, except for a function of a combination playback control section 22.

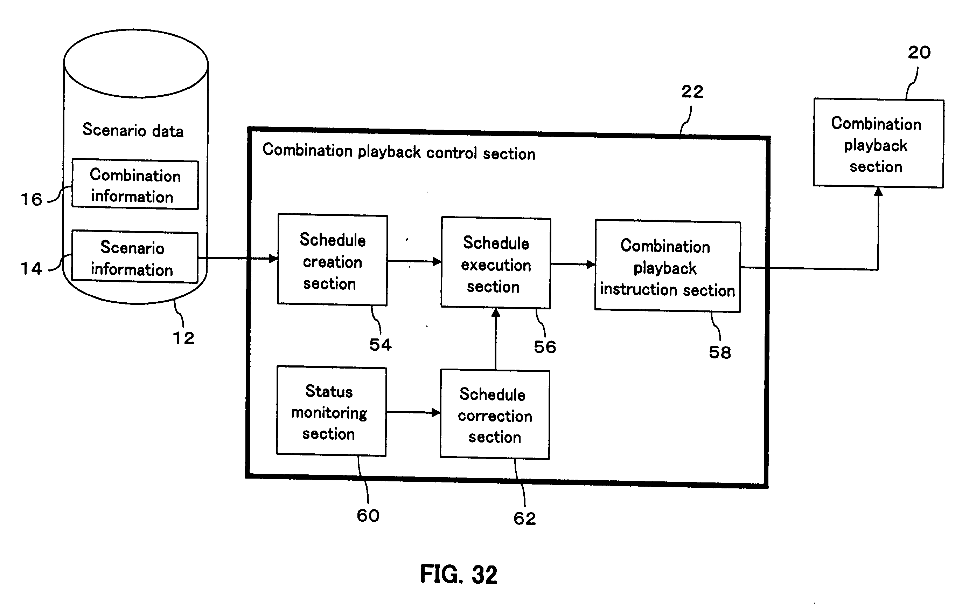

Figure 32 shows a configuration of the combination playback control section 22 of the tenth embodiment. The combination playback control section 22 of the tenth embodiment, in addition to the configuration of the combination playback control section 22 of the ninth embodiment, has a status monitoring section 60 and a schedule correction section 62. The status monitoring section 60 has a function to monitor a CPU utilization rate, an operating condition of a memory, and a device utilization rate. The schedule correction section 62 has a function to set a setup time of a playback of a medium based on each status obtained by the status monitoring section 60.

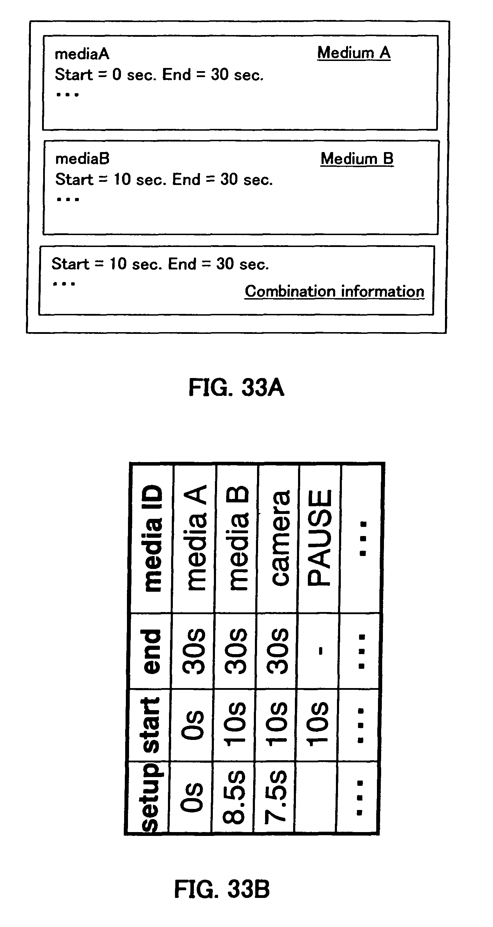

Figure 33A shows an example of scenario data, and Figure 33B shows a schedule list to be created from the scenario data shown in Figure 33A. In the tenth embodiment, the schedule correction section 62, based on statuses obtained by the status monitoring section 60's monitoring, finds the time required to prepare for a playback of a medium or for a startup of a device, and determines a setup time based on the found time. In the example shown in Figure 33B, it is described in the schedule list that a playback start time of a medium B is time t = 10s but its setup is begun at time t = 8.5s because of the time required to prepare for the playback. It is also described in the schedule list that an image-taking start time of an image-taking section 18 is t = 10s but its setup is begun at time t = 7.5s because of the time required to prepare for the startup of the image-taking section 18.

In this way, the schedule correction section 62 sets a setup time, so that at a playback start time of a medium or at a startup start time of a device which is defined in scenario data such process can be started smoothly.

An image-taking apparatus 10 of a eleventh embodiment of the invention will be described next. A basic configuration of the image-taking apparatus 10 of the eleventh embodiment is the same as that of the image-taking apparatus 10 of the first embodiment, except for a function of a combination playback control section 22.

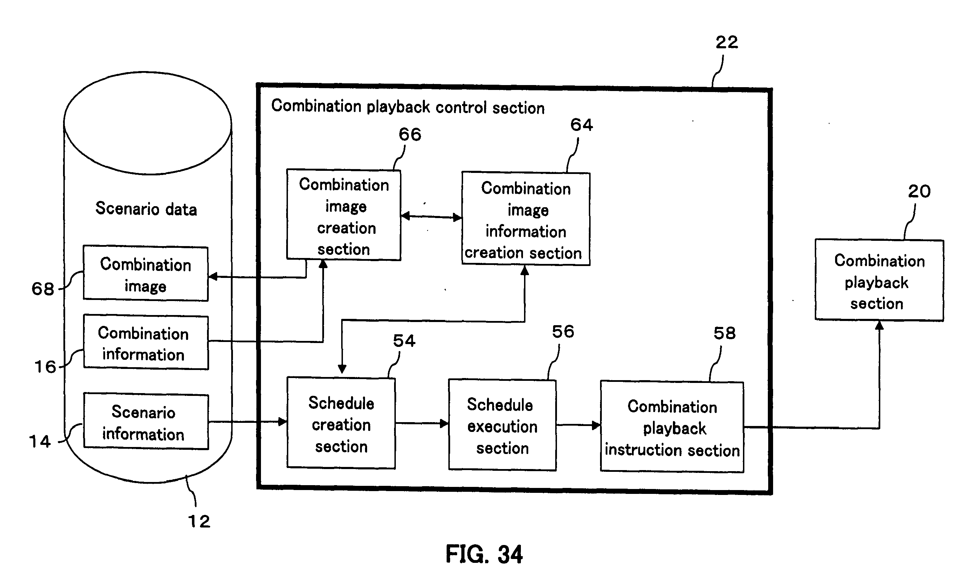

Figure 34 shows a configuration of the combination playback control section 22 of the eleventh embodiment. The combination playback control section 22 of the eleventh embodiment, in addition to the configuration of the combination playback control section 22 of the ninth embodiment, has a combination image information creation section 64 and a combination image creation section 66. The combination image information creation section 64 has a function to find a combination start time with reference to scenario data and pass the combination image creation section 66 information for creating a combination image, i.e. a still image of a scenario image at the combination start time. The combination image creation section 66 has a function to create a combination image based on combination image information passed from the combination image information creation section 64. The combination image creation section 66 stores a created combination image in a scenario storage section 12.

A schedule creation section 54 creates a schedule list which describes a pause in a scenario image after a display of a combination image. The schedule creation section 54 further describes in the schedule list a process to adjust a point to resume the playback of a scenario image caused to pause to a combination start time.

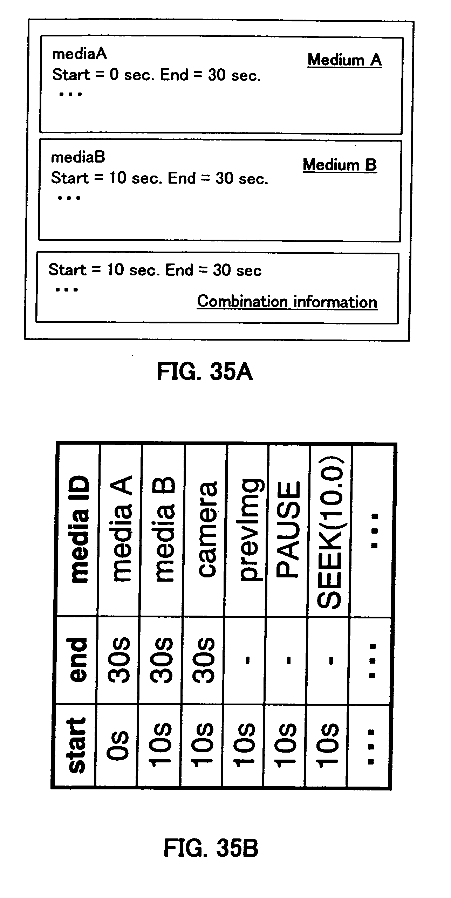

Figure 35A shows an example of scenario data, and Figure 35B shows a schedule list to be created from the scenario data shown in Figure 35A. As shown as "prevImg" in Figure 35B, it is described in the schedule list that a medium whose playback is to be started (medium B) is played back, an image-taking section 18 is started up, then a combination image created by the combination image creation section 66 is displayed, and after that a scenario image is caused to pause, at a combination start time (time t = 10s in this example). This allows a combination image stored in the scenario storage section 12 in advance to be displayed, so that a combination image can be displayed smoothly. Also described in the schedule list is, as shown as "SEEK" in Figure 35B, a process to adjust a point to resume the playback from the pause to the combination start time (hereinafter referred to as a PAUSE point correction process). The SEEK process is a process to shift a playback point to a specified time, and the SEEK process shifts a playback point to a time when a PAUSE process was done. This allows a PAUSE point correction to be done in which a time lag required for a playback to be actually caused to pause by a PAUSE process is recovered. This PAUSE point correction process is not displayed on a screen, but a combined image of a combination image and a taken image displayed in a combination area is displayed on a screen.

In this way, even if a time is required for a playback of a scenario image to be caused to pause, the playback of a scenario image can be resumed at a combination start time. By the way, the SEEK process described in this embodiment can be applied to, also in other embodiments, when a scenario image after a pause is resumed. For example, the schedule creation section 54 of the ninth or tenth embodiment can create a schedule list which describes a process to adjust a point to resume a playback of a scenario image to a combination start time.

Up to this point, the image-taking apparatus 10 and image-taking method of the invention has been described in detail with reference to embodiments. However, the invention is not limited to the above-described embodiments.

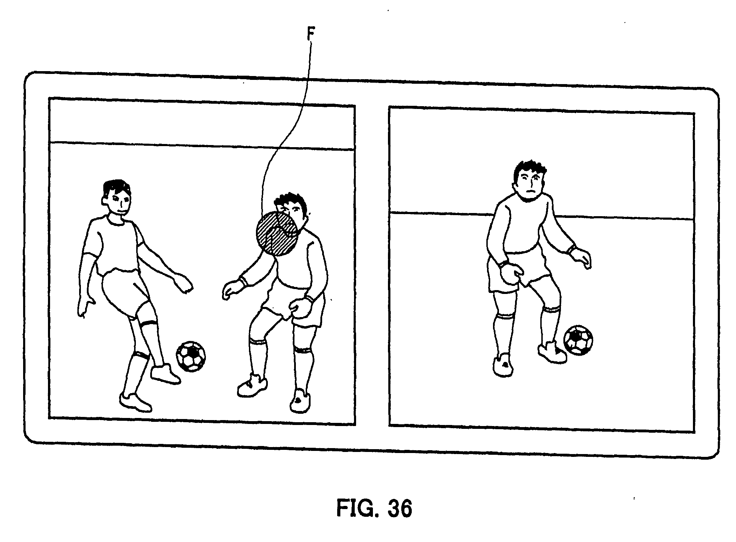

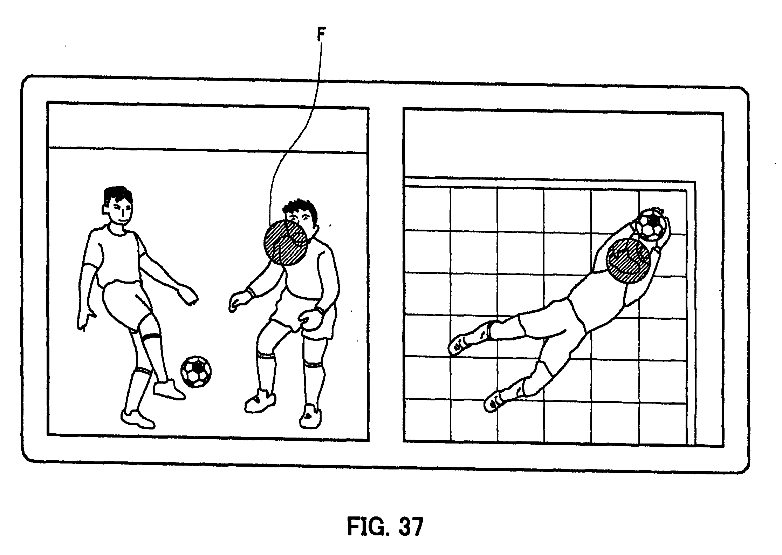

The image-taking apparatus 10 may have a plurality of screens. Figures 36 to 38 show display examples of each screen of an image-taking apparatus 10 which has two screens. For example, as shown in Figure 36, one screen (on the left) can play back and display a scenario image, and the other screen (on the right) can display a taken image which an image-taking section 18 is catching. In this way, what is being taken by the image-taking section 18 can be grasped, and an image to be inserted into a combination area can be caught appropriately. Incidentally, in this example, a frame F showing an outer shape of a combination area is displayed in the screen display of the scenario image in the same way as described in the second embodiment. In addition, as shown in Figure 37, one screen (on the left) can play back and display a scenario image, and the other screen (on the right) can display a combined image preview which is a combination of a scenario image at an appearance time of a combination area and a currently taken image. In this way, a combined image preview can be checked before an appearance of a combination area even if a playback of a scenario image is not caused to pause, whereas it has to be caused to pause in the first embodiment.

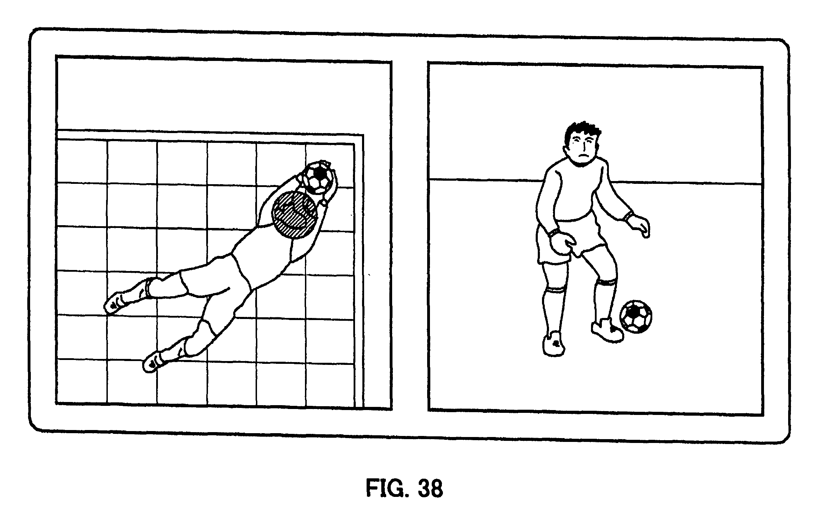

Moreover, when a scenario image and a taken image are being combined, as shown in Figure 38, one screen (on the left) can display a combined image, and the other screen (on the right) can display a taken image taken by the image-taking section 18. This allows the whole of a taken image to be viewed even when it is being combined with a scenario image, so that a taken image can be obtained appropriately.

Furthermore, in a case where an image-taking apparatus 10 has two screens, one of the screens can be provided on a subject side. A combined image or a combined image preview is displayed on the subject-side screen to allow a subject person to view a taken image of the subject himself/herself combined with a scenario image, so that the subject himself/herself can grasp what combined image will be created. This allows, for example, a subject person to judge how he/she would pose.

In the above embodiments, the image-taking apparatus 10 is described in which an image to be taken by the image-taking apparatus 10 is checked by viewing a taken image displayed on a screen and then a position, orientation, zoom ratio, or the like of the image-taking apparatus 10 is adjusted.

However, a configuration may be adopted which allows an image to be taken by an image-taking apparatus 10 to be checked by another method. For example, an illumination section may be provided with an image-taking apparatus 10 in order to illuminate an area caught in a viewfinder of the image-taking apparatus 10. In this way, an image-taking area can be checked by light shone on a subject while a scenario image is being viewed on a display section 24.

An image-taking apparatus and image-taking method of the invention are described in the above embodiments. However, a program composing the above image-taking apparatus or a program to execute the above image-taking method is included in the scope of the invention.

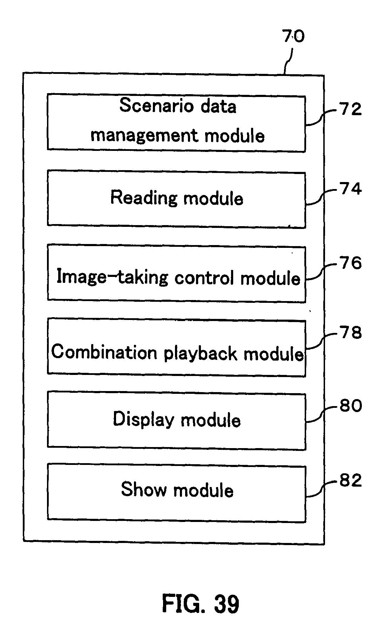

Figure 39 shows an example of a program of the invention. As shown in Figure 39, a program 70 has a scenario data management module 72, a reading module 74, an image-taking control module 76, a combination playback module 78, a display module 80, and a show module 82. A computer in which the program 70 is to be installed is a computer, such as a digital camera, having an image-taking section.

The scenario data management module 72 is a module to make a computer manage scenario data. Executing the scenario data management module 72 allows a computer to have a storage section similar to the scenario storage section 12 of the image-taking apparatus 10 of the above embodiments. The reading module 74 is a module to make a computer read scenario data. The image-taking control module 76 is a module to make a computer take an image to obtain a taken image. Executing the image-taking control module 76 allows a computer to have a function similar to the image-taking condition control section 28 of the image-taking apparatus 10 of the above embodiments. The combination playback module 78 is a module to make a computer play back a scenario image and combine a taken image and a scenario image. The display module 80 is a module to make a computer display a scenario image or a combined image. The show module 82 is a module to make a computer show combination information to a user of the computer. Executing the show module 82 allows the same function as the combination area show section 30 of the image-taking apparatus 10 of the above-described second embodiment to be realized.

By executing the program 70, an image-taking apparatus similar to the image-taking apparatus 10 of the second embodiment can be realized, so that a scenario image and a taken image can be combined during shooting.

### Industrial Applicability

As described above, in the image-taking apparatus of the invention, since a combined image of a scenario image and a taken image is displayed by a display means, a user can shoot while viewing a combined image displayed by the display means, and can adjust a position or orientation of the image-taking apparatus so that an image to be combined is taken appropriately. The invention has these great advantages and is useful as an apparatus or the like for combining an image obtained by shooting and a scenario image.

## Claims

1. An image-taking apparatus comprising:
an image-taking means for obtaining a taken image;
a reading means for reading stored data to compose a scenario image;
a storage means for storing combination information for combining said scenario image and said taken image;
a combination means for combining, according to combination information stored in said storage means, said scenario image read by said reading means and a taken image obtained by said image-taking means; and
a display means for displaying a combined image obtained by said combination means.

2. The image-taking apparatus according to claim 1, wherein said combination information includes information about time to combine said taken image and said scenario image.

3. The image-taking apparatus according to claim 2, wherein said combination information includes at least one of information about an outer shape of a combination area with which said taken image is to be combined and information about a position of said combination area in an image composing said scenario image.

4. The image-taking apparatus according to claim 3, further comprising a means for showing, based on said combination information and at or before time to combine said taken image and said scenario image, information about said combination area to a user who is to control said image-taking means.

5. The image-taking apparatus according to claim 4, wherein information about a combination area to be shown to said user is based on at least one of information about an outer shape and information about a position of said combination information.

6. The image-taking apparatus according to claim 4, wherein information about a combination area to be shown to said user includes an image obtained by processing, according to at least one of information about an outer shape and information about a position of said combination information, a taken image obtained by said image-taking means.

7. The image-taking apparatus according to claim 4, wherein information about a combination area to be shown to said user includes an image obtained by combining, according to said combination information, a taken image obtained by said image-taking means and an image composing said scenario image in which'said combination area is to appear.

8. The image-taking apparatus according to claim 4, comprising a means for causing a playback of said scenario image to pause at time to start combining said scenario image and said taken image.

9. The image-taking apparatus according to claim 3, wherein a position of said combination area in an image composing said scenario image moves with time.

10. The image-taking apparatus according to claim 3, wherein an outer shape of said combination area changes with time.

11. The image-taking apparatus according to claim 2, further comprising a means for informing a user that time to start combining said scenario image and said taken image has approached.

12. The image-taking apparatus according to claim 2, further comprising a means for, in a certain time period including time to start combining said scenario image and said taken image, informing a user of information about a start of combination.

13. The image-taking apparatus according to claim 1, further comprising a means for recording said combined image.

14. The image-taking apparatus according to claim 1, further comprising a means for recording a taken image obtained by said image-taking means in association with identification information of said scenario image.

15. The image-taking apparatus according to claim 1, wherein said image-taking means takes an image based on information about an image-taking condition included in said combination information.

16. The image-taking apparatus according to claim 3, comprising an input means for having a user input at least one of a start instruction and an end instruction of combination of said taken image and said scenario image.

17. The image-taking apparatus according to claim 16, wherein, when said combination start instruction is inputted after time, defined by said combination information, to start combining said taken image and said scenario image, an image to be combined with said combination area, between said defined combination start time and input of said combination start instruction, is complemented with said taken image or said scenario image.

18. The image-taking apparatus according to claim 16, wherein, when said combination end instruction is inputted before time, defined by said combination information, to end combining said taken image and said scenario image, an image to be combined with said combination area, between input of said combination end instruction and said defined combination end time, is complemented with said taken image or said scenario image.

19. The image-taking apparatus according to claim 1, wherein said display means is composed of a plurality of screens, at least one of which displays said scenario image or said combined image.

20. The image-taking apparatus according to claim 1, comprising a light means for shining light to indicate a spot or area to be taken by said image-taking means.

21. The image-taking apparatus according to claim 1, wherein a taken image obtained by said image-taking means is a continuously-taken moving image and said combination means combines said scenario image and said moving image.

22. The image-taking apparatus according to claim 1, wherein a taken image obtained by said image-taking means is one or more still images and said combination means uses one of said still images for a certain time period as an image to be combined with said scenario image.

23. The image-taking apparatus according to claim 1, comprising a partial image clipping means for clipping, as a partial image, part of a taken image taken by said image-taking means,
wherein said combination means combines a partial image clipped by said partial image clipping means and said scenario image.

24. The image-taking apparatus according to claim 23, wherein combination information stored in said storage means includes partial image specification information to specify an area from which and time period for which said partial image clipping means clips a partial image,
and wherein said partial image clipping means clips a partial image from said taken image based on said partial image specification information.

25. The image-taking apparatus according to claim 24, wherein a position of said partial image to be clipped specified in said partial image specification information moves with time.

26. The image-taking apparatus according to claim 24, wherein a shape of said partial image to be clipped specified in said partial image specification information changes with time.

27. The image-taking apparatus according to claim 24, wherein said partial image specification information, by an object to be included in said partial image, specifies a partial image, and wherein said partial image clipping means clips from said taken image, as said partial image, a part which contains an object specified in said partial image specification information.

28. The image-taking apparatus according to claim 1, wherein said combination information, by an object to be included in said combination area, specifies a combination area,
and wherein said combination means regards as said combination area a part, of said scenario image, which displays an object specified in said combination information, and combines said taken image with said combination area.

29. The image-taking apparatus according to claim 8, comprising a control means for controlling to cause said scenario image to pause when there is data whose playback is to be started at time to start combining said taken image and after a playback of that data is started.

30. The image-taking apparatus according to claim 8, comprising:
a preview image storage means for storing as a preview image a scenario image which is to be displayed at time to start combining said taken image; and
a control means for controlling, at time to start combining said taken image, to display said preview image and cause said scenario image to pause.

31. The image-taking apparatus according to claims 29 or 30, wherein said control means shifts a point to resume a playback of said scenario image to time to start said combination.

32. Scenario data having:
scenario information which describes a method of outputting stored data; and
combination information for combining a taken image to be obtained by shooting and a scenario image to be outputted according to a description of said scenario information.

33. The scenario data according to claim 32, wherein said combination information includes information about time to combine said taken image and said scenario image.

34. The scenario data according to claim 32, wherein said combination information includes at least one of information about an outer shape of a combination area with which a taken image is to be combined and information about a position of said combination area in an image composing said scenario image.

35. The scenario data according to claim 32, wherein said combination information includes partial image specification information to specify an area from which and time period for which part of said taken image is clipped as a partial image.

36. The scenario data according to claim 35, wherein a position of said partial image to be clipped specified in said partial image specification information moves with time.

37. The scenario data according to claim 35, wherein a shape of said partial image to be clipped specified in said partial image specification information changes with time.

38. The scenario data according to claim 35, wherein said partial image specification information, by an object to be included in a partial image, specifies an area and time period of said partial image.

39. The scenario data according to claim 32, wherein said combination information, by an object to be included in a combination area with which a taken image is to be combined, specifies said combination area and a time period for which said scenario image includes said combination area.

40. An image-taking method comprising steps of:
reading stored data so as to compose a scenario image;
obtaining a taken image;
reading combination information for combining said scenario image and said taken image;
combining said scenario image and said taken image according to said combination information: and
displaying a combined image obtained in said combination step.

41. A program for, in order to combine a taken image and a scenario image, making a computer execute steps of:
reading stored data so as to compose a scenario image;
obtaining a taken image;
reading combination information for combining said scenario image and said taken image;
combining said scenario image and said taken image according to said combination information; and
displaying a combined image obtained in said combination step.
